# EUROPEAN PATENT APPLICATION

(11) **EP 4 418 500 A1**
(43) Date of publication of application: **21.08.2024**
(21) Application number: 23887163.6
(22) Date of filing: 11.12.2023
(51) Int. Cl.: H02K 1/32, H02K 9/19

(54) **OIL-COOLED MOTOR, POWERTRAIN AND VEHICLE**

(30) Priority: 21.12.2022 CN 202211648353
(71) Applicant: Huawei Digital Power Technologies Co., Ltd., Shenzhen, Guangdong 518043 (CN)
(72) Inventor: BIAN, Fei, Shenzhen, Guangdong 518043 (CN); LAN, Hua, Shenzhen, Guangdong 518043 (CN); YAN, Keyu, Shenzhen, Guangdong 518043 (CN)
(74) Representative: Isarpatent
(86) International application number: PCT/CN2023/137814
(87) International publication number: WO 2024/131581

(57) **Abstract**

This application provides an oil-cooled motor, a powertrain, and a vehicle. The oil-cooled motor includes a rotating shaft and a first rotor iron core and a second rotor iron core that are sleeved on the rotating shaft and are adjacent to each other. A rotating shaft oil channel configured to communicate with a cooling system is disposed in the rotating shaft. M first oil channels that penetrate through two end faces of the first rotor iron core are disposed in the first rotor iron core. N second oil channels are disposed in the second rotor iron core. N openings that communicate with the rotating shaft oil channel are provided on an inner circumferential surface that is of the second rotor iron core and that faces the rotating shaft. The N openings are in one-to-one communication with the N second oil channels. Each second oil channel communicates with a plurality of first oil channels. M and N are both positive integers, and M is greater than N. According to the oil-cooled motor provided in this application, a contact area between cooling oil and an interior of a rotor can be increased without affecting structural strength and magnetic conductivity of the rotor, so that cooling effect is improved.

## Description

This application claims priority to Chinese Patent Application No. 202211648353.3, filed with the China National Intellectual Property Administration on December 21, 2022 and entitled "OIL-COOLED MOTOR, POWERTRAIN, AND VEHICLE", which is incorporated herein by reference in its entirety.

### TECHNICAL FIELD

This application relates to the field of motor technologies, and in particular, to an oil-cooled motor, a powertrain, and a vehicle.

### BACKGROUND

High power density is a long-term trend in the field of motors. A driving motor with high power density generates high heat inside, and consequently, a service life and stability of the motor are affected. In order to control a temperature of the motor, cooling modes such as air cooling, water cooling, and oil cooling are usually used for the motor. An air-cooled motor has disadvantages of being large in noise, prone to be interfered by dust, and the like. A water-cooled motor uses an independent water channel, and consequently, cannot directly cool a stator and a rotor inside the motor. In addition, a size of the motor is further increased by designing the water channel.

An oil-cooled motor uses non-conductive and non-magnetic cooling oil as a cooling medium, and an oil channel is disposed inside an apparatus, to implement more efficient heat exchange in the motor. However, currently, in an oil-cooled motor, heat dissipation effect and magnetic conductivity usually trend to be contradictory, and it is difficult to implement both the heat dissipation effect and the magnetic conductivity.

### SUMMARY

This application provides an oil-cooled motor that can improve heat dissipation effect and ensure magnetic conductivity.

According to a first aspect, this application provides an oil-cooled motor. The oil-cooled motor includes a rotating shaft, a first rotor iron core, and a second rotor iron core. Both the first rotor iron core and the second rotor iron core are sleeved on the rotating shaft, and the first rotor iron core and the second rotor iron core are adjacent to each other. A rotating shaft oil channel is disposed in the rotating shaft. M first oil channels are disposed in the first rotor iron core, and each first oil channel penetrates through two end faces of the first rotor iron core. N second oil channels are disposed in the second rotor iron core. N openings are provided on an inner circumferential surface that is of the second rotor iron core and that faces the rotating shaft. The N openings are in one-to-one communication with the N second oil channels. All the N openings communicate with the rotating shaft oil channel. Each second oil channel communicates with a plurality of first oil channels. M and N are both positive integers, and M is greater than N.

In this implementation, when the oil-cooled motor operates, a rotor, a stator, and a winding generate heat, and an oil pump in a cooling system provides power to drive cooling oil into the rotating shaft oil channel. The opening separately communicates with the rotating shaft oil channel and the second oil channel. The opening can guide a flow direction of the cooling oil, so that the cooling oil flows to each of the N second oil channels after flowing through the opening. At least one of the N second oil channels communicates with the plurality of first oil channels, so that the cooling oil enters the first oil channels that communicate with the second oil channel. The cooling oil passes through the foregoing oil path, and is directly in contact with the rotor in different directions inside the rotor. This helps improve heat dissipation effect. After flowing out of the first oil channel, due to centrifugal force, the cooling oil is sprayed to surfaces of the stator and the winding through the first oil channel, to cool the stator and the winding. Finally, the cooling oil flows back to a cooler in the cooling system, and enters the rotating shaft oil channel again to complete a cooling circulation process. This improves utilization of the cooling oil.

In this application, one second oil channel is disposed to communicate with a plurality of first oil channels. In one aspect, compared with the technical solution in which the second oil channel communicates with the first oil channel in a one-to-one correspondence, in this implementation, fewer second oil channels may be disposed. When there are more second oil channels in the second rotor iron core, an aperture of each second oil channel is smaller. This not only affects a flow speed of a coolant, but also reduces structural strength of the second rotor iron core, and affects magnetic conductivity. When a quantity of first oil channels and a quantity of second oil channels are smaller, cooling effect is worse. In this implementation, a quantity of second oil channels decreases relative to that of first oil channels, so that negative impact caused by oil channel disposing on structural strength and magnetic conductivity of the second rotor iron core can be reduced. In addition, in this application, a quantity of first oil channels that correspondingly communicate with a single second oil channel is large, so that a contact area between the cooling oil and the first rotor iron core is increased. This improves heat dissipation effect on the first rotor iron core.

In another aspect, when the second oil channel communicates with the first oil channel in a one-to-one correspondence, and an aperture of the first oil channel in the first rotor iron core is increased to improve cooling effect, although a flow rate and a contact area of the cooling oil in the first rotor iron core are increased, because the first rotor iron core is mainly used to conduct a magnetic line, no magnetic line is conducted in a vacant part of the first rotor iron core due to oil channel aperture increasing. In this way, structural strength and magnetic conductivity of the rotor are reduced accordingly.

However, in this application, the plurality of first oil channels communicate with one second oil channel, so that cooling effect can be improved, the rotor operates within a proper temperature range, and structural strength and magnetic conductivity of the first rotor iron core can be ensured. In addition, the quantity of second oil channels is reduced, so that structural strength of the second rotor iron core is ensured. This helps balance a contradiction relationship between the structural strength and the magnetic conductivity and the cooling effect, and improve operating efficiency of the rotor. In addition, both the first oil channel and the second oil channel are disposed inside the rotor, and no additional cooling oil channel needs to be disposed. This helps reduce an overall size of the oil-cooled motor and reduce manufacturing costs.

In a possible implementation, the first rotor iron core includes a plurality of first laminations that are stacked in an axial direction of the rotating shaft. Each of the plurality of first laminations is provided with a plurality of first oil holes. The first oil holes of the plurality of first laminations are stacked in the axial direction of the rotating shaft to form the first oil channel. In this implementation, the first rotor iron core is formed by stacking the first laminations, so that a thickness of the first rotor iron core in the axial direction of the rotating shaft may be adjusted according to an actual requirement.

In a possible implementation, the second rotor iron core includes a plurality of second laminations that are stacked in the axial direction of the rotating shaft. Each of the plurality of second laminations is provided with a plurality of second oil holes. The plurality of second oil holes of different second laminations are stacked in the axial direction of the rotating shaft to form the second oil channel. In this implementation, the second rotor iron core is formed by stacking the second laminations, so that a thickness of the second rotor iron core in the axial direction of the rotating shaft may be adjusted according to an actual requirement.

In a possible implementation, the first lamination and the second lamination may be silicon steel sheets. In this implementation, the first rotor iron core and the second rotor iron core have magnetic conductivity.

In a possible implementation, the plurality of first oil holes of different first laminations are aligned in the axial direction of the rotating shaft, and the plurality of second oil holes of different second laminations are aligned in the axial direction of the rotating shaft. In this way, the first oil channel and the second oil channel extend in the axial direction of the rotating shaft, that is, the first oil channel and the second oil channel are in a straight line shape. This implementation helps reduce resistance on the cooling oil when the cooling oil flows between the first oil channel and the second oil channel.

In a possible implementation, the plurality of first oil holes of different first laminations may be disposed in a staggered manner, and the plurality of second oil holes of different second laminations may be disposed in a staggered manner. In this implementation, the first oil channel and the second oil channel may be in an arc shape, so that an oil channel path is extended.

In a possible implementation, positioning components are disposed at corresponding positions on the first lamination and the second lamination. The first lamination and the second lamination are respectively stacked in the axial direction of the rotating shaft by using the positioning components to form the first rotor iron core and the second rotor iron core. In this implementation, the positioning components are disposed on the first lamination and the second lamination. This helps reduce mounting difficulty of the first rotor iron core and the second rotor iron core, and improve assembly accuracy.

In a possible implementation, the N second oil channels jointly form an axisymmetric structure, and an axis of the second rotor iron core is located on an axis of symmetry of the axisymmetric structure. In this solution, the N second oil channels are disposed in an axisymmetric structure, so that processing process difficulty of the second rotor iron core can be reduced, and heat dissipation of the second rotor iron core is more uniform. In this way, amount of cooling oil entering the first oil channel in the first rotor iron core is more uniform, and heat dissipation uniformity of the first rotor iron core is improved.

In a possible implementation, the N second oil channels jointly form a rotational symmetry structure, and a rotation center of the rotational symmetry structure is an axis of the second rotor iron core. In this solution, the second oil channels are distributed in a rotationally symmetrical manner, so that processing process difficulty of the second rotor iron core can be reduced. In addition, because the second oil channels are uniformly distributed on a peripheral side of the axis, the cooling oil can flow out from different parts of the rotor. This helps the cooling oil to uniformly absorb heat inside the rotor, and provides an important guarantee for heat dissipation effect of the oil-cooled motor.

In a possible implementation, the N second oil channels jointly form a 360°/N rotational symmetry structure. In this implementation, the 360°/N rotational symmetry structure jointly formed by using the N second oil channels is distributed in a rotationally symmetrical manner with respect to the axis of the second rotor iron core, and an included angle between two adjacent second oil channels is 360°/N. For example, a quantity of second oil channels is 6, an included angle between two adjacent second oil channels is 60°, and after the second rotor iron core is rotated by 60°, the second oil channel coincides with the adjacent second oil channel. In this solution, the second oil channels are distributed in a 360°/N rotationally symmetrical manner, so that processing process difficulty of the second rotor iron core can be reduced. In addition, because the second oil channels are uniformly distributed on a peripheral side of the axis, the cooling oil can flow out from different parts of the rotor. This helps the cooling oil to uniformly absorb heat inside the rotor, and provides an important guarantee for heat dissipation effect of the oil-cooled motor.

In a possible implementation, one or more stray oil channels exist between two adjacent second oil channels, each of the stray oil channels corresponds to one first oil channel, and each of the stray oil channels is configured to communicate with the corresponding first oil channel. In this implementation, at least a part of each first oil channel inlet is located in a projection region of the stray oil channel. When flowing through the second rotor iron core, the cooling oil flows to the first oil channel through both the second oil channel and the stray oil channel. In this solution, disposing the stray oil channel can increase the contact area between the cooling oil and the interior of the second rotor iron core. In addition, because each stray oil channel is disposed corresponding to one first oil channel, utilization of the first oil channel on the first rotor iron core is further improved. This helps improve cooling efficiency of the cooling oil for the rotor.

In a possible implementation, the N second oil channels and the one or more stray oil channels located between the two adjacent second oil channels jointly form a rotational symmetry structure. In this implementation, the second oil channel and the stray oil channel are distributed in a rotationally symmetrical manner with respect to the axis of the second rotor iron core. In this solution, the second oil channel and the stray oil channel are distributed in a rotationally symmetrical manner, so that processing process difficulty of the second rotor iron core can be reduced. In addition, because the second oil channel and the stray oil channel are uniformly distributed on a peripheral side of the axis, the cooling oil can flow out from different parts of the rotor. This helps the cooling oil to uniformly absorb heat inside the rotor, and provides an important guarantee for heat dissipation effect of the oil-cooled motor.

In a possible implementation, the first rotor iron core is provided with a first rotor end face facing the second rotor iron core, and the second rotor iron core is provided with a second rotor end face facing the first rotor iron core. An outlet of the second oil channel is located on the second rotor end face, and an inlet of the first oil channel is located on the first rotor end face. At least a part of an inlet of each of more than two first oil channels is located in a projection region of the second oil channel. In this way, the first oil channel can communicate with the second oil channel. The projection region of the second oil channel is a region that is enclosed by a projection, on the first rotor end face, of an edge of the outlet of the second oil channel in the axial direction of the rotating shaft.

In a possible implementation, each of the plurality of first oil channels includes a first oil channel body and a first oil channel inlet located at an end of the first oil channel body. The first oil channel inlet is the inlet of the first oil channel. Two end faces that are of the first rotor iron core and that are disposed opposite to each other in the axial direction of the rotating shaft include a first rotor end face disposed close to the second rotor iron core, and the first oil channel inlet is located in the first rotor end face.

In a possible implementation, the second rotor iron core includes a second rotor end face disposed close to the first rotor iron core. The second oil channel includes a second oil channel opening located in the second rotor end face, and the second oil channel opening is the outlet of the second oil channel. In this implementation, because the first rotor iron cores are disposed on both sides of the second rotor iron core, the second oil channel penetrates through two end faces that are of the second rotor iron core and that are disposed opposite to each other in the axial direction. One second oil channel opening is separately provided on two ends of the second oil channel, and each second oil channel opening corresponds to one first rotor iron core that is adjacent to the second oil channel opening.

In a possible implementation, a projection region, on the first rotor end face, of the second oil channel opening in the axial direction of the rotating shaft covers at least two first oil channel inlets, and the second oil channel opening communicates with the at least two first oil channel inlets. In this way, the first oil channel can communicate with the second oil channel.

In a possible implementation, the first oil channel inlet communicates with the first oil channel body, and at least two first oil channel inlets correspondingly communicate with one second oil channel, so that after flowing to the second oil channel, the cooling oil may enter the corresponding first oil channel body through the at least two first oil channel inlets, and exchange heat with a peripheral sidewall of the first oil channel body, to implement heat dissipation inside the first rotor iron core.

In a possible implementation, the first rotor end face is attached to the second rotor iron core, so that the cooling oil can smoothly flow into the first oil channel inlet located on the first rotor end face after entering the second oil channel. This reduces resistance on the cooling oil when the cooling oil flows inside the rotor.

In a possible implementation, the projection region, on the first rotor end face, of the second oil channel opening in the axial direction of the rotating shaft covers a part of each of the at least two first oil channel inlets. In this solution, the second oil channel opening communicates with a part of each of the at least two first oil channel inlets, so that the second oil channel communicates with the plurality of first oil channels.

In a possible implementation, each of the plurality of first oil channels includes a first outlet that is located at an end of the first oil channel body and that is disposed opposite to the first oil channel inlet. Two end faces that are of the first rotor iron core and that are disposed opposite to each other in the axial direction of the first rotor iron core include a second end face that is disposed away from the second rotor iron core, and the first outlet is located in the second end face. In this implementation, when the cooling oil flows to the first outlet, due to effect of centrifugal force, the cooling oil is thrown out of the rotor, and is sprayed to the stator and the winding, to cool the stator and the winding.

In a possible implementation, the first outlet is a diagonal hole that is provided toward the stator. This helps improve spraying effect after the cooling oil flows out of the second oil channel.

In a possible implementation, the first oil channel body extends in the axial direction of the rotating shaft. The first oil channel body extends in the axial direction of the rotating shaft. This is equivalent to the following: The first oil channel extends in the axial direction of the rotating shaft. In this case, projections, on the first rotor end face, of at least two first oil channels in the axial direction of the rotating shaft are located in the second oil channel. In this solution, the first oil channel is disposed to extend in the axial direction of the rotating shaft, so that resistance on the cooling oil when the cooling oil flows in the first oil channel can be reduced, and processing process difficulty of the first rotor iron core can be reduced.

In a possible implementation, an extension path of the first oil channel body may be any curve or a diagonal line, that is, an extension direction of the first oil channel intersects an axial direction of the first rotor iron core. In this solution, a length of the first oil channel can be increased, and a contact area between the cooling oil and the first oil channel can be increased, to improve cooling effect.

In a possible implementation, the second oil channel includes a first end and a second end that are disposed opposite to each other in a radial direction of the rotating shaft. The first end is connected to an end that is of the opening and that is away from the rotating shaft, and the first end is closer to the rotating shaft than the second end. At least a part of the N second oil channels are featured oil channels, and in the featured oil channel, a width of the second end in a rotation direction of the second rotor iron core is greater than a width of the first end in the rotation direction of the second rotor iron core.

The rotation direction of the second rotor iron core is a circumferential direction of the second rotor iron core. In this implementation, because a length of a circumference that is of the second rotor iron core and that is close to the axis is small, and a length of a circumference that is of the second rotor iron core and that is away from the axis is large, the width of the second end in the rotation direction of the second rotor iron core is set to be greater than the width of the first end in the rotation direction of the second rotor iron core, so that an opening area of a part close to an axial direction is small. This helps ensure structural strength. If the circumference close to the axis is set to be large, structural strength of a part close to the inner circumference becomes poor.

In this implementation, the projection region, on the first rotor end face, of the first oil channel in the axial direction of the rotating shaft is close to the second end and away from the first end. The width of the second end in the rotation direction of the second rotor iron core is set to be greater than the width of the first end in the rotation direction of the second rotor iron core. This helps provide space for the second oil channel to communicate with more first oil channels.

In this implementation, when the cooling oil dissipates heat for the rotor, the cooling oil needs to fill the second oil channel in the radial direction to a specific depth before entering the first oil channel smoothly. In one aspect, continuity of the cooling oil in the first oil channel can be ensured, so that the cooling oil does not easily generate an air column in a circulation process. In another aspect, the cooling oil is sufficiently in contact with a side wall of the second oil channel. This helps increase the contact area between the cooling oil and the second oil channel, and further ensures the cooling effect of the cooling oil on the second rotor iron core. In still another aspect, when flowing through the second oil channel, the cooling oil is further in contact with the first rotor end face of the first rotor ion core in addition to the side wall of the second oil channel of the second rotor iron core, so that the first rotor iron core can be cooled and heat-dissipated. In this way, cooling efficiency is improved.

In a possible implementation, an extension path of a side wall between the first end and the second end may be a broken line. In this case, the second oil channel is integrally in a hammer shape. This implementation helps increase a contact area between the cooling oil and the side wall of the second oil channel when the cooling oil flows in the second oil channel, and improve heat dissipation effect of the cooling oil on the interior of the second rotor iron core.

In a possible implementation, each of the N second oil channels is a featured oil channel, that is, the second oil channel includes a first end and a second end that are disposed opposite to each other in the radial direction of the rotating shaft. The first end is disposed closer to an axis of the rotating shaft than the second end, and the width of the second end in the rotation direction of the second rotor iron core is greater than the width of the first end in the rotation direction of the second rotor iron core.

In a possible implementation, each of the N second oil channels is in a hammer shape, so that a contact area between the cooling oil and the interior of the rotor can be further increased, and cooling effect can be improved.

In a possible implementation, all the second oil channels are featured oil channels. In this implementation, cooling efficiency of the cooling oil in the second rotor iron core can be improved while structural strength of the second rotor iron core is ensured.

In a possible implementation, in a radial direction of the second rotor iron core, a width of the featured oil channel gradually increases from the first end to the second end in the rotation direction of the second rotor iron core. A radius direction of the second rotor iron core is an extension direction of a radius extending from a circle center of the second rotor iron core to a circle edge of the second rotor iron core.

In this implementation, when the cooling oil dissipates heat for the rotor, the cooling oil needs to fill the second oil channel in the radial direction to a specific depth before entering the first oil channel smoothly. In one aspect, continuity of the cooling oil in the first oil channel can be ensured, so that the cooling oil does not easily generate an air column in a circulation process. In another aspect, the cooling oil is sufficiently in contact with a side wall of the second oil channel. This helps increase the contact area between the cooling oil and the second oil channel, and further ensures the cooling effect of the cooling oil on the rotor. In still another aspect, when flowing through the second oil channel, the cooling oil is further in contact with the first rotor end face of the first rotor ion core in addition to the side wall of the second oil channel of the second rotor iron core, so that the first rotor iron core can be cooled and heat-dissipated. In this way, cooling efficiency is improved.

In a possible implementation, the second oil channel is integrally sector-shaped. Because the projection region, on the first rotor end face, of the first oil channel in the axial direction of the rotating shaft is away from an axis of the second rotor iron core, a width of the second oil channel in the rotation direction of the second rotor iron core is set to linearly increase in a direction away from the axis of the rotating shaft from a direction close to the axis of the rotating shaft. This helps provide space for the second oil channel to communicate with more first oil channels. In an implementation, the width of the second oil channel in the rotation direction of the second rotor iron core may increase nonlinearly in a direction away from the axis of the rotating shaft from a direction close to the axis of the rotating shaft.

A quantity of second oil channels in the second rotor iron core may be set randomly. For example, the quantity of second oil channels is 6, and the six second oil channels are disposed at intervals in a circumferential direction around the axis of the rotating shaft. It should be noted that a person skilled in the art may adjust the quantity of second oil channels according to an actual requirement. This is not limited in this application.

In a possible implementation, a width of each of the N second oil channels in the rotation direction of the second rotor iron core gradually increases in a direction away from the axis of the rotating shaft from the direction close to the axis of the rotating shaft. In this implementation, each of the N second oil channels is sector-shaped, so that a contact area between the cooling oil and the interior of the rotor can be further increased, and cooling effect can be improved.

In a possible implementation, a cross section of the featured oil channel is arc-shaped or sector-shaped, and the cross section of the featured oil channel is perpendicular to the axial direction of the rotating shaft.

In a possible implementation, when the cross section of the featured oil channel is in sector-shaped, a width of the featured oil channel gradually increases from the first end to the second end in the rotation direction of the second rotor iron core. In this implementation, when the rotor is cooled, the cooling oil flows into the opening, and flows to the second oil channel after being sufficiently in contact with a side wall of the opening. In one aspect, because the second oil channel and the opening are integrally in a "T" shape, an area that is of the second rotor iron core and that needs to be occupied by disposing the second oil channel is small, so that great impact on overall strength and magnetic conductivity of the rotor due to oil channel disposing can be avoided. In another aspect, the cooling oil is sufficiently in contact with the second oil channel and an inner wall of the opening, so that the contact area between the cooling oil and the second oil channel is increased, and cooling effect of the cooling oil on the rotor is further ensured. In still another aspect, when flowing through the second oil channel and the opening, the cooling oil is further in contact with the first rotor end face of the first rotor iron core in addition to the second oil channel and the side wall of the opening, so that the first rotor iron core can be cooled and heat-dissipated, and cooling efficiency can be improved.

In a possible implementation, when the cross section of the featured oil channel is arc-shaped, the second oil channel extends in a circumferential direction of the rotating shaft, and a width of the featured oil channel changes slightly from the first end to the second end in the rotation direction of the second rotor iron core. An opening extends in the radial direction of the rotating shaft, and an end that is of the opening and that is away from the rotating shaft and the second oil channel are adjacent to each other and communicate with each other. Each of the N second oil channels communicates with at least two first oil channels.

In a possible implementation, the second oil channel is disposed away from an inner circumferential surface of the second rotor iron core. Compared with disposing the second oil channel close to the inner circumferential surface of the second rotor iron core, disposing the second oil channel away from the inner circumferential surface of the second rotor iron core helps expand a circumferential size of the second oil channel, and provides space for the second oil channel to communicate with more first oil channels. The second oil channel communicates with at least two first oil channels. Specifically, a projection region, on the first rotor end face, of the second oil channel in the axial direction of the first rotor iron core covers at least two first oil channel inlets.

In a possible implementation, when the second rotor iron core is fastened to the rotating shaft through interference, acting force between the rotating shaft and the second rotor iron core is concentrated on a part of the second rotor iron core between two adjacent second oil channels. When a radial size of the opening is large, stress in the part of the second rotor iron core between the two adjacent second oil channels is large, so that the second oil channel is close to a through hole for accommodating a magnetic part outside. In this way, the stress in the part of the second rotor iron core between two adjacent second oil channels is transferred to the through hole for accommodating the magnetic part. This affects structural strength at the magnetic part, and further reduces overall structural strength of the second rotor iron core. Therefore, in this implementation, the second oil channel may be disposed as close as possible to the rotating shaft, or the radial size of the opening is set to be small. In a case in which the circumferential size of the second oil channel is the same, the radial size of the opening is set to be short, so that stress can be reduced and structural strength of the second rotor iron core can be ensured.

In a possible implementation, when the rotor is fastened to the rotating shaft by using a pin, a fastener, a screw, or the like, the second oil channel is disposed away from the rotating shaft without considering stress generated through interference fitting. This helps ensure structural strength of the second rotor iron core.

In a possible implementation, the second oil channel includes a first end and a second end that are disposed opposite to each other in a radial direction of the rotating shaft. The first end is connected to an end that is of the opening and that is away from the rotating shaft, and the first end is closer to the rotating shaft than the second end. At least a part of the N second oil channels are second featured oil channels, and in the second featured oil channel, a width of the first end in a rotation direction of the second rotor iron core is greater than a width of the second end in the rotation direction of the second rotor iron core.

In this implementation, the second featured oil channel is concave, and the featured oil channel is convex. That the second featured oil channel is concave means that the middle of the second oil channel is closer to an inner circumferential surface of the second rotor iron core than two ends of the second oil channel, and the width of the first end in the rotation direction of the second rotor iron core is greater than the width of the second end in the rotation direction of the second rotor iron core. That the featured oil channel is convex means that the middle of the second oil channel is closer to an outer circumferential surface of the second rotor iron core than two ends of the second oil channel, and the width of the first end in the rotation direction of the second rotor iron core is less than the width of the second end in the rotation direction of the second rotor iron core. In this implementation, a part of the second oil channels are disposed as the second featured oil channels, so that the cooling oil is located in a part that is in the second rotor iron core and that is close to the rotating shaft when flowing in the second oil channels. In this way, some second rotor iron cores that are near the rotating shaft can be heat-dissipated and cooled.

In a possible implementation, the projection region of the second oil channel covers at least two first oil channels. In this solution, the cooling oil can flow into the first oil channel through the second oil channel, so that utilization of the first oil channel is improved, and cooling effect of the cooling oil on the first rotor iron core and the second rotor iron core is improved.

In a possible implementation, all the second oil channels are second featured oil channels. This solution helps further improve heat dissipation effect of the cooling oil on some second rotor iron cores that are near the rotating shaft.

In a possible implementation, in a radial direction of the second rotor iron core, a width of the second featured oil channel gradually decreases from the first end to the second end in the rotation direction of the second rotor iron core. In this implementation, a cross section of the second featured oil channel is sector-shaped, so that a contact area between the cooling oil and the interior of the rotor can be further increased, and cooling effect can be improved. It may be understood that, to ensure that the second oil channel communicates with at least two first oil channels, a direction in which the at least two first oil channels are arranged needs to be the same as an extension direction of the second oil channel.

In a possible implementation, the second oil channel covers a part of each of the at least two first oil channels. In this implementation, the second oil channel can communicate with the first oil channel. In this implementation, the second oil channel communicates with an end that is of the first oil channel and that is close to the rotating shaft, so that the second oil channel is disposed closer to the rotating shaft. When the second rotor iron core is fastened to the rotating shaft through interference, structural strength can be ensured.

In this implementation, when the cooling oil flows into the opening, a part of the cooling oil enters the second oil channel that communicates with the opening, and the remaining cooling oil enters the first oil channel inlet that communicates with the second oil channel, so that the cooling oil can flow into the rotor from different positions of the first rotor end face in the axial direction. This further improves heat dissipation effect of the cooling oil and effectively alleviates a problem of local overheating of the rotor.

In a possible implementation, at least a part of the first oil channel inlet and the outlet of the second oil channel overlap.

In a possible implementation, the second oil channel is a featured oil channel. In this implementation, a size of a region of an overlapping part between the second oil channel and the first oil channel is mainly determined by the second end, and the featured oil channel has a feature that the width of the first end in the rotation direction of the second rotor iron core is less than the width of the second end in the rotation direction of the second rotor iron core. Therefore, in this implementation, the second oil channel is set to the featured oil channel, which helps increase the overlapping part between the second oil channel and the first oil channel. In this way, a flow rate of the cooling oil flowing from the second oil channel to the first oil channel is increased.

In a possible implementation, each of the plurality of second oil channels is a second featured oil channel. In this implementation, each of the plurality of second oil channels and the opening jointly form a "T" shape, so that a relationship between rotor structure strength, magnetic conductivity, and cooling effect can be effectively balanced.

In a possible implementation, at least one of the plurality of second oil channels includes a first sub-oil channel and a second sub-oil channel. An arc length of the first sub-oil channel is greater than an arc length of the second sub-oil channel, and a quantity of first oil channels in the first sub-oil channel is greater than a quantity of first oil channels in the second sub-oil channel.

In this implementation, specifically, projections, on the first rotor end face, of the at least two first oil channels in the axial direction of the first rotor iron core are located in the first sub-oil channel, and projections, on the first rotor end face, of the at least two first oil channels in the axial direction of the first rotor iron core are located in the second sub-oil channel. The opening communicates with the second sub-oil channel and the first sub-oil channel in sequence in the radial direction of the second rotor iron core. When the rotor is cooled, the cooling oil enters the opening, flows to the second sub-oil channel and the first sub-oil channel in sequence, and finally flows to the first oil channel. When flowing through the second oil channel, the cooling oil is in contact with the opening, a side wall of the second sub-oil channel, and a side wall of the first sub-oil channel. This helps cool the second rotor iron core in the radial direction. In addition, the cooling oil is also in contact with the first rotor end face on both sides. This helps cool the first rotor iron core in the radial direction. In this solution, by using the first sub-oil channel, the second sub-oil channel, and the opening, cooling uniformity of the first rotor iron core and the second rotor iron core can be effectively improved, and temperature distribution inside the rotor can be improved.

In this implementation, because the arc length of the first sub-oil channel is greater than the arc length of the second sub-oil channel, the first sub-oil channel can provide larger space to communicate with the first oil channel relative to the second sub-oil channel. In this case, if a quantity of first oil channels in the first sub-oil channel is set to be equal to a quantity of first oil channels in the second sub-oil channel, spacing between the first oil channels in the second sub-oil channel is extremely narrow. This increases processing process difficulty and also reduces strength of the inner circumferential surface of the second rotor iron core.

The arc length of the first sub-oil channel is a length, at two ends in the rotation direction of the second rotor iron core, of the first sub-oil channel. The arc length of the second sub-oil channel is a length, at two ends in the rotation direction of the second rotor iron core, of the second sub-oil channel.

In a possible implementation, all the second oil channels each include two sub-oil channels. This implementation helps further improve cooling uniformity of the first rotor iron core and the second rotor iron core.

In a possible implementation, the second rotor iron core includes at least one second oil channel of the featured oil channel and the second featured oil channel. A cross section of the featured oil channel is arc-shaped or sector-shaped, a cross section of the second featured oil channel is arc-shaped or sector-shaped, and second oil channels having different cross sections are alternately spaced from each other in a circumferential direction.

This implementation helps combine advantages of the featured oil channel and the second featured oil channel, so that effect of heat exchange between the cooling oil and the first rotor iron core and the second rotor iron core is good.

In a possible implementation, N first oil slots extending in the axial direction of the rotating shaft are provided on an inner circumferential surface of the first rotor iron core, and the first oil slot is spaced from the first oil channel. The opening penetrates through the second rotor iron core in the axial direction of the rotating shaft, and the N openings are in one-to-one communication with the N first oil slots in the axial direction of the rotating shaft.

In this implementation, the opening is provided to penetrate through the second rotor end face that is of the second rotor iron core and that faces the first rotor iron core, so that when flowing through the opening, the cooling oil may enter, in the axial direction, the first oil slot provided opposite to the opening. In this case, heat exchange is performed between the cooling oil and a slot wall of the first oil slot. This helps cool the inner circumferential surface of the first rotor iron core and improve cooling effect.

In a possible implementation, the plurality of first oil channels are sequentially spaced from each other around the axis of the rotating shaft, the plurality of first oil slots are sequentially spaced from each other around the axis of the rotating shaft, and a quantity of first oil channels is greater than a quantity of first oil slots.

In this implementation, the first oil channel is disposed in the circumferential direction around the axis of the first rotor iron core, so that the cooling oil can flow out from different parts of the rotor. This helps the cooling oil to uniformly absorb heat inside the rotor, and can prevent a part of the cooling oil from staying in the second oil channel, so that heated cooling oil can be discharged from the rotor in a timely manner, and an important guarantee is provided for heat dissipation effect of the oil-cooled motor.

In this implementation, because a size of the inner circumferential surface of the first rotor iron core is small, space for providing the first oil slot on the inner circumferential surface of the first rotor iron core is correspondingly small. In this case, if extremely many first oil slots are provided, strength of the inner circumferential surface of the first rotor iron core is reduced.

In a possible implementation, the oil-cooled motor further includes a plurality of magnetic parts. The magnetic part is configured to generate magnetic force, each of the plurality of magnetic parts penetrates through the first rotor iron core and the second rotor iron core in the axial direction of the rotating shaft. The plurality of magnetic parts are sequentially spaced from each other around an axis of the rotating shaft, and the first oil channel is located between the magnetic part and the inner circumferential surface of the first rotor iron core.

In this implementation, the magnetic part may be a magnetic steel or an aluminum strip, and the magnetic part is configured to directly or indirectly generate magnetic force.

When the magnetic part is an aluminum strip, the oil-cooled motor is an asynchronous motor. The asynchronous motor is a motor in which a speed of a rotor is less than a rotation speed of a rotating magnetic field generated by a stator. A main difference between an asynchronous motor and a synchronous motor lies in a structure of the rotor. A rotor of the synchronous motor is inserted with an aluminum strip. After a winding of the stator is powered on, a rotating magnetic field is generated in an air gap between the stator and the rotor. The rotor cuts the magnetic field to generate an induced electric potential. Because the rotor is short-circuited, a rotor current is generated. The rotor current interacts with the magnetic field in the air gap to generate an electromagnetic torque, to drive the rotor to rotate.

When the magnetic part is a magnetic steel, the oil-cooled motor is a synchronous motor. The synchronous motor is a motor in which a rotation speed of the rotor is consistent with a rotation speed of a rotating magnetic field of the stator. A magnetic steel is inserted into the rotor of the synchronous motor, and the magnetic steel can generate magnetic force, so that the rotor has a magnetic field. The magnetic field of the rotor rotates synchronously with the magnetic field of the stator due to magnetic pulling force of the magnetic field of the stator. In this implementation, two adjacent magnetic steels are distributed in a "V" shape, and are arranged in a double "V" shape. In another implementation, the magnetic steel may be distributed in a combination of a "linear" shape and a "V" shape, or may be distributed according to a requirement. However, in general, all the magnetic steels are located on an outer axial side that is of the first oil channel and that is away from the rotating shaft.

In a possible implementation, in a radial direction of the second rotor iron core, the second oil channel is located between the magnetic part and the inner circumferential surface of the second rotor iron core. In this solution, the first oil channel and the second oil channel are disposed between the magnetic part and the inner circumferential surface of the rotor, so that the first oil channel and the second oil channel do not occupy space for disposing the magnetic part on the rotor. In this way, magnetic conductivity of the rotor can be effectively ensured and negative impact on the magnetic conductivity caused by disposing an oil channel on the rotor can be avoided. In addition, the second oil channel is disposed close to the magnetic part, which helps the cooling oil to cool and dissipate heat for the magnetic part, and reduce a temperature of the magnetic part.

In a possible implementation, the oil-cooled motor includes one first rotor iron core and one second rotor iron core.

In this implementation, the second oil channel may be a duct provided on an end face that is of the second rotor iron core and that faces the first rotor iron core. In this case, the second oil channel does not penetrate through the second rotor iron core. In one aspect, the cooling oil still needs to be in contact with the side wall of the second oil channel first, and then enters the first oil channel. Therefore, cooling may also be performed on an end face on which the first rotor iron core is in contact with the second rotor iron core. In another aspect, the cooling oil can be prevented from leaking out of the rotor through the second oil channel. In this implementation, the second oil channel communicates with at least two first oil channels, and the second rotor iron core in a shape of the duct enables a cooling medium to have a large flow area, so that cooling effect on the second rotor iron core is improved. In addition, the at least two first oil channels communicate with the second oil channel, so that cooling effect is good while structural strength of the first rotor iron core is ensured.

In a possible implementation, the second rotor iron core includes an end iron core sub-part and a middle iron core sub-part that are disposed adjacent to each other in the axial direction of the rotating shaft. The middle iron core sub-part is further away from the first rotor iron core than the end iron core sub-part. The end iron core sub-part is provided with an end sub-oil channel that penetrates through the end iron core sub-part in the axial direction of the rotating shaft. The middle iron core sub-part is provided with a groove, a groove opening of the groove faces the end iron core sub-part, and the end sub-oil channel and the groove communicate with each other and form the second oil channel.

In this implementation, at least a part of the end sub-oil channel and the groove overlap, and communicate with each other, so that the cooling oil enters the first rotor iron core through the groove and the end sub-oil channel, to dissipate heat of the first rotor iron core and the second rotor iron core. This solution helps reduce an average volume occupied by disposing the second oil channel on each second rotor iron core, so that structural strength and magnetic conductivity of the second rotor iron core are enhanced.

In a possible implementation, the opening is provided on the middle iron core sub-part, and extends, from an inner circumferential surface of the middle iron core sub-part, away from the rotating shaft in the radial direction of the rotating shaft. The groove communicates with the opening.

In this implementation, the opening is provided on the inner circumferential surface of the middle iron core sub-part, and the opening and the middle iron core sub-part are spaced from each other in the radial direction of the rotating shaft. At least a part of the groove and the opening overlap, and communicate with each other, and the end sub-oil channel of the end iron core sub-part communicates with the opening of the end iron core sub-part through the groove of the middle iron core sub-part. The end sub-oil channel communicates with the first oil channel of the first rotor iron core. After flowing through the opening, the cooling oil flows through the groove and the end sub-oil channel in sequence, and enters the first oil channel, to cool and dissipate heat for the interior of the first rotor iron core and the interior of second rotor iron core.

In a possible implementation, the oil-cooled motor includes two first rotor iron cores and one second rotor iron core that are all sleeved on the rotating shaft. The second rotor iron core is located between the two first rotor iron cores. The second oil channel penetrates through the second rotor iron core, and the second oil channel separately communicates with a plurality of first oil channels in each first rotor iron core.

In this implementation, the oil-cooled motor includes two first rotor iron cores and one second rotor iron core. The second rotor iron core is located in the middle of the rotor, and an opening of the second rotor iron core penetrates through two end faces that are of the second rotor iron core and that are disposed opposite to each other in the axial direction of the rotating shaft. When flowing through the second rotor iron core, the cooling oil is in contact with a side wall of the second oil channel in a direction from an inner circumferential surface of the second rotor iron core to an outer circumferential surface of the second rotor iron core. In addition, the cooling oil is further in contact with end faces of the first rotor iron cores that are located on two sides in the axial direction of the second oil channel.

When flowing through the first rotor iron core, the cooling oil is in contact with an inner wall of the first oil channel in the axial direction of the first rotor iron core. Because at least one of the plurality of second oil channels communicates with at least two first oil channels of the two first rotor iron cores, a radial cross section of the at least one of the plurality of second oil channels is greater than a radial cross section of the first oil channel. Generally, a temperature of the cooling oil that flows out of the rotor is higher than a temperature of the cooling oil that enters the rotor from the opening. Because the cooling oil needs to flow through the opening of the second rotor iron core when entering the rotor from the rotating shaft oil channel, the second rotor iron core is disposed in the middle, so that a contact area, in the middle of the rotor, between the cooling oil and the rotor is large. In addition, a surface of one second oil channel can cool end faces of two first rotor iron cores, so that the middle part with a high temperature of the rotor can be efficiently cooled, to control temperature rise of the rotor.

In a possible implementation, each of the plurality of second oil channels communicates with at least two first oil channels. This solution can further increase the contact area between the cooling oil and the interior of the rotor, and improve cooling effect.

In a possible implementation, the second rotor iron core includes two end iron core sub-parts and a middle iron core sub-part that are disposed in the axial direction of the rotating shaft. The middle iron core sub-part is located between the two end iron core sub-parts. The end iron core sub-part is provided with an end sub-oil channel that penetrates through the end iron core sub-part in the axial direction of the rotating shaft. The middle iron core sub-part is provided with a middle sub-oil channel that penetrates through the middle iron core sub-part in the axial direction of the rotating shaft. The middle sub-oil channel communicates with the end sub-oil channels of the two end iron core sub-parts. The end sub-oil channels of the two end iron core sub-parts and the middle sub-oil channel form the second oil channel.

In this implementation, the end iron core sub-parts are disposed on both sides of the middle iron core sub-part, and the cooling oil separately flows to the end sub-oil channels of the end iron core sub-parts on the two sides in the axial direction of the rotating shaft through the middle sub-oil channel of the middle iron core sub-part, to implement internal heat dissipation for the second rotor iron core. In this solution, three iron core sub-parts are disposed in the second rotor iron core, and an oil channel is disposed in each iron core sub-part. Compared with a case in which a larger hole is provided in a same iron core sub-part, this solution can increase overall structural strength of the second rotor iron core.

In a possible implementation, the opening is provided on the middle iron core sub-part, and extends, from an inner circumferential surface of the middle iron core sub-part, away from the rotating shaft in a radial direction of the rotating shaft. The opening communicates with the middle sub-oil channel.

In this implementation, because the middle sub-oil channel communicates with the opening, when the middle iron core sub-part is fixedly sleeved on the rotating shaft through interference fitting, acting force between the rotating shaft and the middle iron core sub-part is concentrated on a part of the middle iron core sub-part between two adjacent middle sub-oil channels. In addition, when a radial length of the opening is large, stress on the part of the middle iron core sub-part between the two adjacent middle sub-oil channels is large.

In a possible implementation, the end sub-oil channels in the two end iron core sub-parts respectively communicate with the first oil channels in the two first rotor iron cores.

In this implementation, the cooling oil flows to the middle sub-oil channel and the end sub-oil channel of the second rotor iron core through the opening, and then flows to the first oil channel of the first rotor iron core in the axial direction of the rotating shaft. When structural strength of the middle iron core sub-part is not affected, heat dissipation is performed for the interior of the first rotor iron core and the interior of the second rotor iron core, to control temperature rise of the rotor.

In a possible implementation, the middle sub-oil channel is disposed closer to the rotating shaft than the end sub-oil channel.

In this implementation, both the end sub-oil channel and the middle sub-oil channel are arc-shaped structures that are of the second oil channel and that extend in the circumferential direction of the rotating shaft. The middle sub-oil channel is disposed closer to the rotating shaft than the end sub-oil channel, so that stress can be reduced. When a circumferential size of the middle sub-oil channel is the same, and the middle sub-oil channel is disposed away from the rotating shaft, the middle sub-oil channel is close to a through hole for accommodating the magnetic part, so that stress in a part of the middle iron core sub-part between two adjacent middle sub-oil channels is transferred to the through hole for accommodating the magnetic part. This affects structural strength at the magnetic part, and further reduces overall structural strength of the middle iron core sub-part.

In addition, when a circumferential size of the middle sub-oil channel is the same, and the middle sub-oil channel is disposed away from the rotating shaft, the middle sub-oil channel is close to a through hole for accommodating the magnetic part, so that stress in a part of the middle iron core sub-part between two adjacent middle sub-oil channels is transferred to the through hole for accommodating the magnetic part. This affects structural strength at the magnetic part, and further reduces overall structural strength of the middle iron core sub-part. In this implementation, the middle sub-oil channel is disposed closer to the rotating shaft than the end sub-oil channel, so that overall structural strength of the middle iron core sub-part can be improved.

In a possible implementation, the oil-cooled motor further includes at least three first rotor iron cores and at least two second rotor iron cores. A quantity of first rotor iron cores is greater than a quantity of second rotor iron cores. The at least three first rotor iron cores and the at least two second rotor iron cores are alternately arranged in the axial direction of the rotating shaft. A thickness, in the axial direction of the rotating shaft, of a first rotor iron core that is close to the middle and that is of the at least three first rotor iron cores is less than a thickness, in the axial direction of the rotating shaft, of a first rotor iron core that is away from the middle.

In a possible implementation, the oil-cooled motor includes three first rotor iron cores and two second rotor iron cores. Because the first rotor iron cores and the second rotor iron cores are alternately arranged in the axial direction, the first rotor iron core is located in the middle of the rotor, and an axial size of a thickness of the first rotor iron core located in the middle of the rotor in the axial direction of the rotating shaft is less than an axial size of a thickness of another first rotor iron core in the rotor in the axial direction of the rotating shaft. In addition, an opening of the second rotor iron core penetrates through two end faces of the second rotor iron core, and separately communicates with the first oil slots on the two sides. The axial size is a size in an axial direction of the first rotor iron core.

In this implementation, when flowing through the second rotor iron core, the cooling oil is in contact with a side wall of the second oil channel in a direction from an inner circumferential surface of the second rotor iron core to the outer circumferential surface of the outer circumferential surface of the second rotor iron core. In addition, the cooling oil is further in contact with end faces of the first rotor iron cores that are located on two sides in the axial direction of the second oil channel. When flowing through the first rotor iron core, the cooling oil is in contact with an inner wall of the first oil channel in the axial direction of the first rotor iron core. Because the second oil channel at least communicates with the two first oil channels, a cross section of the second oil channel needs to be set to be greater than a cross section of the first oil channel. That an axial size of a thickness of the first rotor iron core disposed in the middle of the rotor in the axial direction of the rotating shaft is smaller means that a spacing between the second rotor iron cores on the two sides is small.

When the rotor is cooled, the cooling oil flows through the first oil slot of the first rotor iron core and the opening of the second rotor iron core in sequence, then flows into the second oil channel of the second rotor iron core, and then flows into the first oil channel of the first rotor iron core and the second oil channel of the second rotor iron core on the other side. Because a heating part of the rotor is mainly concentrated in the middle, the cooling oil has a large contact area with the second oil channels in the two second rotor iron cores, and a surface of one second oil channel in the two second rotor iron cores can cool the end faces of the two first rotor iron cores, so that the middle part with a high temperature of the rotor can be efficiently heat-dissipated, to control temperature rise of the rotor.

In a possible implementation, the oil-cooled motor includes four first rotor iron cores and three second rotor iron cores, and a second rotor iron core is located in the middle of the rotor. Axial sizes of the two first rotor iron cores located on two sides of the second rotor iron core are less than axial sizes of other first rotor iron cores in the rotor. In addition, an opening of the second rotor iron core penetrates through two end faces of the second rotor iron core, and separately communicates with first oil slots on the two sides.

In this implementation, when flowing through the second rotor iron core, the cooling oil is in contact with a side wall of the second oil channel in a direction from an inner circumferential surface of the second rotor iron core to an outer circumferential surface of the second rotor iron core. When flowing through the first rotor iron core, the cooling oil is in contact with an inner wall of the first oil channel in the axial direction of the first rotor iron core. Because the second oil channel communicates with at least two first oil channels, a radial cross section of the second oil channel is greater than a radial cross section of the first oil channel. The axial sizes of the first rotor iron cores located on two sides of the second rotor iron core in the middle are small. This is equivalent to the following: That a spacing between the three second rotor iron cores is small.

When the rotor is cooled, the cooling oil can flow into the second oil channel of the second rotor iron core only after passing through the first oil channel of the first rotor iron core with a small distance. When flowing into the second oil channel, the cooling oil is changed slightly in temperature relative to that of the cooling oil before the cooling oil flows into the rotor, and still has good cooling effect. Because a heating part of the rotor is mainly concentrated in the middle, the cooling oil has a large contact area with the second oil channels in the two second rotor iron cores, and a surface of one second oil channel in the two second rotor iron cores can cool the end faces of the two first rotor iron cores, so that the middle part with a high temperature of the rotor can be efficiently heat-dissipated, to control temperature rise of the rotor.

In a possible implementation, a thickness of the second rotor iron core in the axial direction of the rotating shaft is less than a thickness of the first rotor iron core in the axial direction of the rotating shaft.

In this implementation, in one aspect, a cross-sectional area occupied by disposing the second oil channel and providing the opening on the second rotor iron core is greater than a cross-sectional area occupied by disposing the first oil channel and providing the first oil slot on the first rotor iron core. In this case, the thickness of the second rotor iron core in the axial direction of the rotating shaft is less than the thickness of the first rotor iron core in the axial direction of the rotating shaft, so that a vacant part of the rotor due to oil channel disposing is small. This helps ensure magnetic conductivity effect and structural strength of the rotor. In another aspect, because heat of the rotor is mainly concentrated in the middle, if a thickness of the second rotor iron core in the middle in the axial direction of the rotating shaft is set to be large, a temperature of the cooling oil is high after the cooling oil flows through the second rotor iron core. In this case, cooling effect for the first rotor iron cores on both sides is greatly affected. In this solution, the thickness of the second rotor iron core in the axial direction of the rotating shaft is set to be less than the thickness of the first rotor iron core in the axial direction of the rotating shaft, which helps improve heat dissipation effect of the first rotor iron core.

In a possible implementation, the rotating shaft oil channel includes an axial oil channel extending in the axial direction of the rotating shaft and a radial oil channel extending in the radial direction of the rotating shaft. The radial oil channel penetrates through an inner surface and an outer surface of the rotating shaft in the radial direction of the rotating shaft, and the radial oil channel communicates with both the axial oil channel and the opening.

In this implementation, an end of the axial oil channel communicates with an oil cooling system. When the rotor is cooled, cooling oil in the cooling system enters the axial oil channel. Because the radial oil channel communicates with the axial oil channel and the opening, the cooling oil enters the opening from the axial oil channel through the radial oil channel, and then flows through the second oil channel and the first oil channel in sequence, to dissipate heat for the interior of the rotor.

In a possible implementation, the axial oil channel includes an axial oil channel body and an axial oil channel inlet. The axial oil channel inlet is located at an end that is of the axial oil channel body and that is close to the cooling system. The axial oil channel inlet communicates with the cooling system, and when the rotor is cooled, the cooling oil in the cooling system enters the axial oil channel body from the axial oil channel inlet.

In a possible implementation, a second oil slot extending in the axial direction of the rotating shaft is provided on an outer circumferential surface of the rotating shaft, and the second oil slot communicates with both the radial oil channel and the opening.

In this implementation, the first oil slot and the second oil slot cooperate with each other for use, and the cooling oil flows from the radial oil channel into an oil channel formed through cooperation of the first oil slot and the second oil slot, and then flows into the opening. In some other implementations, the first oil slot and the second oil slot may be used separately. For example, the first rotor iron core includes the first oil slot, and the second oil slot is not provided on the rotating shaft. Alternatively, the first rotor iron core is not provided with the first oil slot, and the second oil slot is provided on the rotating shaft.

In a possible implementation, an outer circumferential surface of the rotating shaft and an inner circumferential surface of the rotor are in interference fit. This solution helps eliminate impact of a fitting gap between the rotor and the rotating shaft on connection stability, and improve overall structural strength of the rotor and the rotating shaft.

In a possible implementation, the oil-cooled motor further includes a shaft shoulder and a retainer ring. The shaft shoulder is disposed outside a rotating shaft portion corresponding to an end that is of the rotor and that is away from the axial oil channel inlet. The retainer ring is disposed outside a rotating shaft portion corresponding to an end that is of the rotor and that is close to the axial oil channel inlet. In this implementation, the shaft shoulder and the retainer ring jointly enable the rotor to be axially fastened to the rotating shaft. In addition, the shaft shoulder is disposed to prevent the cooling oil from leaking along the first oil slot, so that waste of the cooling oil is avoided.

According to a second aspect, this application provides a powertrain, including a transmission and the oil-cooled motor according to any one of the implementations of the first aspect. A rotating shaft of the oil-cooled motor is fixedly connected to a power input shaft of the transmission, and is configured to output power to the power input shaft.

In this implementation, the transmission is configured to receive power output by the oil-cooled motor, and transmit the power to wheels, to drive the wheels to rotate. The transmission and oil-cooled motor in the powertrain can be separated or integrated.

In this solution, the oil-cooled motor according to any one of the implementations of the first aspect is used in the powertrain. Because the axial motor has advantages of both strong magnetic conductivity and high cooling efficiency, overall operating efficiency and stability of the powertrain are ensured.

According to a third aspect, this application provides a vehicle, including a vehicle body and the oil-cooled motor according to any implementation of the first aspect, where the oil-cooled motor is mounted on the vehicle body; or the vehicle includes the vehicle body and the powertrain according to the second aspect, where the powertrain is mounted on the vehicle body.

When the vehicle travels, the oil-cooled motor in the powertrain provides power for wheels. In a running process of the oil-cooled motor, heat is generated inside the oil-cooled motor. In this case, cooling oil is usually used for cooling and heat dissipation. However, cooling effect of the oil-cooled motor is limited by a contact area between the cooling oil and the interior of a heating device. If extremely many oil channels are disposed on the heating device, structural strength and magnetic conductivity of the device are deteriorated. However, reducing a quantity of oil channels makes the contact area between the cooling oil and the oil channel smaller, and makes heat dissipation effect not ideal.

In this application, the oil-cooled motor according to any one of the implementations of the first aspect is mounted on the vehicle body, or the powertrain according to the second aspect is mounted on the vehicle body. Because a relationship between magnetic conductivity of an internal component of the oil-cooled motor and cooling effect is balanced, the vehicle can use the powertrain to stabilize transmitted power, thereby improving a service life of the vehicle.

### BRIEF DESCRIPTION OF DRAWINGS

To describe technical solutions in embodiments of this application more clearly, the following describes the accompanying drawings used in embodiments of this application.
FIG. 1 is a schematic diagram of a structure of an oil-cooled motor according to an embodiment of this application;
FIG. 2 is a schematic diagram of a structure of a powertrain according to an embodiment of this application;
FIG. 3 is a schematic diagram of a structure of a vehicle according to an embodiment of this application;
FIG. 4 is a schematic diagram of structures of a rotor and a rotating shaft in an oil-cooled motor according to a first embodiment of this application;
FIG. 5 is an A-A sectional view of the rotor and the rotating shaft shown in FIG. 4;
FIG. 6 is a schematic diagram of a structure of a first rotor iron core in an oil-cooled motor according to a first embodiment of this application;
FIG. 7 is a schematic diagram of a structure of a second rotor iron core in an oil-cooled motor according to a first embodiment of this application;
FIG. 8 is an axial projection diagram of a first rotor iron core and a second rotor iron core according to a first embodiment of this application;
FIG. 9 is a sectional view of an oil-cooled motor according to a first embodiment of this application;
FIG. 10 is a partial exploded view of a rotor in an oil-cooled motor according to a first embodiment of this application;
FIG. 11 is a schematic diagram of a structure of a rotor in an oil-cooled motor according to a first embodiment of this application;
FIG. 12 is a schematic diagram of a structure of a rotor in an oil-cooled motor according to a second embodiment of this application;
FIG. 13 is a schematic diagram of a structure of a rotor in an oil-cooled motor according to a third embodiment of this application;
FIG. 14 is a schematic diagram of a structure of a rotor in an oil-cooled motor according to a fourth embodiment of this application;
FIG. 15 is a projection diagram of a rotor in an oil-cooled motor according to a fifth embodiment of this application;
FIG. 16 is a schematic diagram of a structure of a second rotor iron core according to a sixth embodiment of this application;
FIG. 17 is a schematic diagram of a structure of a second rotor iron core in an oil-cooled motor according to a seventh embodiment of this application;
FIG. 18 is a schematic diagram of a structure of a first rotor iron core in an oil-cooled motor according to a first embodiment of this application;
FIG. 19 is a partial exploded view of a rotor in an oil-cooled motor according to a first embodiment of this application;
FIG. 20 is a schematic diagram of structures of a first rotor iron core and a second rotor iron core in an axial direction of a rotating shaft according to a first embodiment of this application;
FIG. 21 is a schematic diagram of structures of a first rotor iron core and a magnetic part according to a first embodiment of this application;
FIG. 22 is a schematic diagram of a structure of a first rotor iron core in an oil-cooled motor according to a first embodiment of this application;
FIG. 23 is a schematic diagram of a structure of a second rotor iron core in an oil-cooled motor according to a first embodiment of this application;
FIG. 24 is a schematic diagram of structures of a first rotor iron core and a magnetic part according to an eighth embodiment of this application;
FIG. 25 is a schematic diagram of a structure of a first rotor iron core in an oil-cooled motor according to an eighth embodiment of this application;
FIG. 26 is a schematic diagram of a structure of a second rotor iron core in an oil-cooled motor according to an eighth embodiment of this application;
FIG. 27 is a sectional view of an oil-cooled motor according to a ninth embodiment of this application;
FIG. 28 is a sectional view of a rotor in an oil-cooled motor according to a tenth embodiment of this application;
FIG. 29 is a sectional view of an oil-cooled motor according to an eleventh embodiment of this application;
FIG. 30 is an exploded view of an oil-cooled motor according to a twelfth embodiment of this application;
FIG. 31 is a sectional view of an oil-cooled motor according to a twelfth embodiment of this application;
FIG. 32 is a projection diagram of an oil-cooled motor in an axial direction of a rotating shaft according to a twelfth embodiment of this application;
FIG. 33 is a sectional view of an oil-cooled motor according to a thirteenth embodiment of this application;
FIG. 34 is a sectional view of an oil-cooled motor according to a first embodiment of this application;
FIG. 35 is a sectional view of an oil-cooled motor according to an eleventh embodiment of this application;
FIG. 36 is a sectional view of an oil-cooled motor according to a first embodiment of this application;
FIG. 37 is a sectional view of an oil-cooled motor according to a fourteenth embodiment of this application;
FIG. 38 is a sectional view of an oil-cooled motor according to a fifteenth embodiment of this application; and
FIG. 39 is a schematic diagram of a structure of a second rotor iron core in an oil-cooled motor according to a sixteenth embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

For ease of understanding, the following first explains and describes related technical terms in embodiments of this application.

Inner circumferential surface: The inner circumferential surface is an inner surface that surrounds a component in a circumferential direction.

Outer circumferential surface: The outer circumferential surface is an outer surface that surrounds a component in a circumferential direction.

Synchronous motor: The synchronous motor is a motor whose rotor speed is consistent with a rotational speed of a stator rotating magnetic field. Synchronous motors include permanent magnet synchronous motors, synchronous reluctance motors, and hysteresis synchronous motors.

Asynchronous motor: The asynchronous motor is a motor whose rotor speed is less than a rotational speed of a stator rotating magnetic field. Asynchronous motors include induction motors and alternating current commutator motors.

Verticality: Verticality defined in this application is not limited to an absolute vertical intersection (with an included angle of 90 degrees) relationship, a non-absolute vertical intersection relationship caused by factors such as an assembly tolerance, a design tolerance, and a structural flatness is allowed, and an error within a small angle range is allowed. For example, a relationship within an assembly error range of 80 degrees to 100 degrees may be understood as the vertical relationship.

Embodiments of this application provide an oil-cooled motor. The oil-cooled motor includes a rotating shaft, a first rotor iron core, and a second rotor iron core. Both the first rotor iron core and the second rotor iron core are sleeved on the rotating shaft, and the first rotor iron core and the second rotor iron core are adjacent to each other. A rotating shaft oil channel is disposed in the rotating shaft, the rotating shaft oil channel is configured to communicate with a cooling system, and cooling oil enters the first rotor iron core and the second rotor iron core through the rotating shaft oil channel. M first oil channels are disposed in the first rotor iron core, and each first oil channel penetrates through two end faces of the first rotor iron core. When the cooling oil flows through the first oil channel, heat exchange is performed between the cooling oil and an inner wall of the first oil channel and the two end faces of the first oil channel. N second oil channels are disposed in the second rotor iron core. N openings are provided on an inner circumferential surface that is of the second rotor iron core and that faces the rotating shaft. All the N openings communicate with the rotating shaft oil channel, so that the cooling oil enters the openings from the rotating shaft oil channel. The N second oil channels are in one-to-one communication with the N openings, and each of the plurality of second oil channels communicates with a plurality of first oil channels. The cooling oil enters the opening from the rotating shaft oil channel, and enters the second oil channel from the opening. When flowing through the second oil channel, the cooling oil exchanges heat with the opening and an inner wall of the second oil channel, and cooling oil flowing from one second oil channel enters the plurality of first oil channels. Compared with one oil channel, the plurality of first oil channels may increase a contact area between the cooling oil and the interior of the first rotor iron core, and improve cooling effect on the first rotor iron core. Compared with an oil channel with a large aperture, the plurality of first oil channels may ensure structural strength and magnetic conductivity of the first rotor iron core. According to the oil-cooled motor provided in embodiments of this application, a contact area between the cooling oil and the interior of a rotor can be increased without affecting structural strength and magnetic conductivity of the rotor, so that cooling effect is improved.

The oil-cooled motor provided in embodiments of this application may be used in a powertrain, and the powertrain including the oil-cooled motor provided in embodiments of this application may also be used in a vehicle.

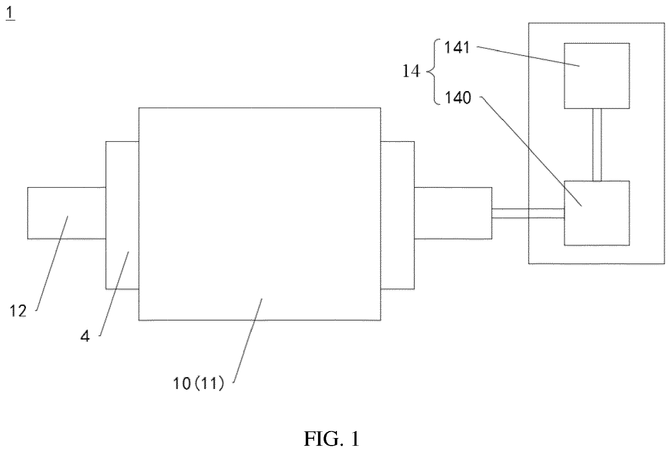

FIG. 1 is a schematic diagram of a structure of an oil-cooled motor 1 according to an embodiment of this application. The oil-cooled motor 1 includes a rotor 4, a stator 10, and a rotating shaft 12. The rotor 4 is mounted on the rotating shaft 12 and is fixedly connected to the rotating shaft 12. The stator 10 is sleeved around a periphery of the rotor 4. The stator 10 is rotatably connected to the rotating shaft 12. The stator 10 is wound with a winding 11 (not shown in the figure). When an alternating current is input into the winding 11, a generated alternating flux interacts with a permanent magnetic flux generated by the rotor 4, so that the rotor 4 rotates relative to the stator 10. The rotor 4 is fixedly connected to the rotating shaft 12, so that the rotating shaft 12 rotates with the rotor 4. The stator 10 is rotatably connected to the rotating shaft 12, so that the rotating shaft 12 can rotate relative to the stator 10. When the oil-cooled motor 1 operates, the stator 10 does not move, and the rotor 4 and the rotating shaft 12 rotate synchronously. An output end of the rotating shaft 12 is configured to drive an external component to rotate. The oil-cooled motor 1 further includes a cooling system 14. The cooling system 14 includes an oil pump 140 and a cooler 141. The cooler 141 is configured to cool cooling oil that flows back, and the oil pump 140 is configured to drive the cooling oil to flow in an oil path.

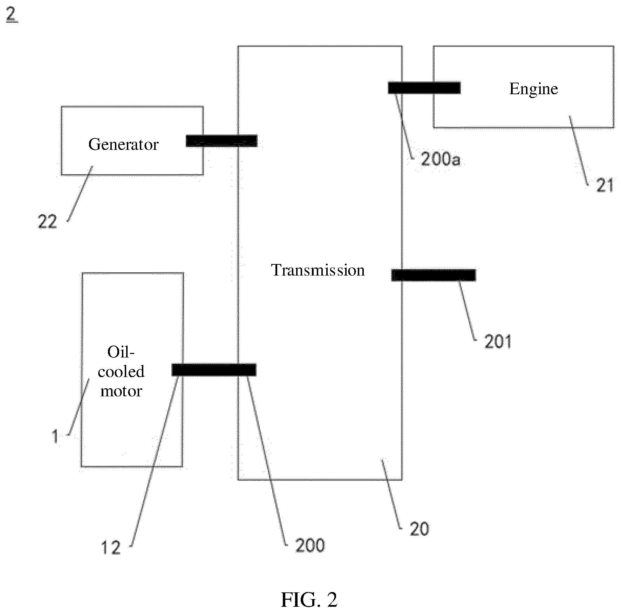

FIG. 2 is a schematic diagram of a structure of a powertrain 2 according to an embodiment of this application. The powertrain 2 includes a transmission 20 and an oil-cooled motor 1. An output end of the oil-cooled motor 1 is in a transmission connection to a power input shaft 200 of the transmission 20, and the oil-cooled motor 1 can transmit power to the power input shaft 200 when operating. In this implementation, the transmission 20 and oil-cooled motor 1 in the powertrain 2 may be separated or integrated. In a specific implementation, the rotating shaft 12 of the oil-cooled motor 1 is fixedly connected to the power input shaft 200 of the transmission 20, so that power of the oil-cooled motor 1 is transmitted to the power input shaft 200.

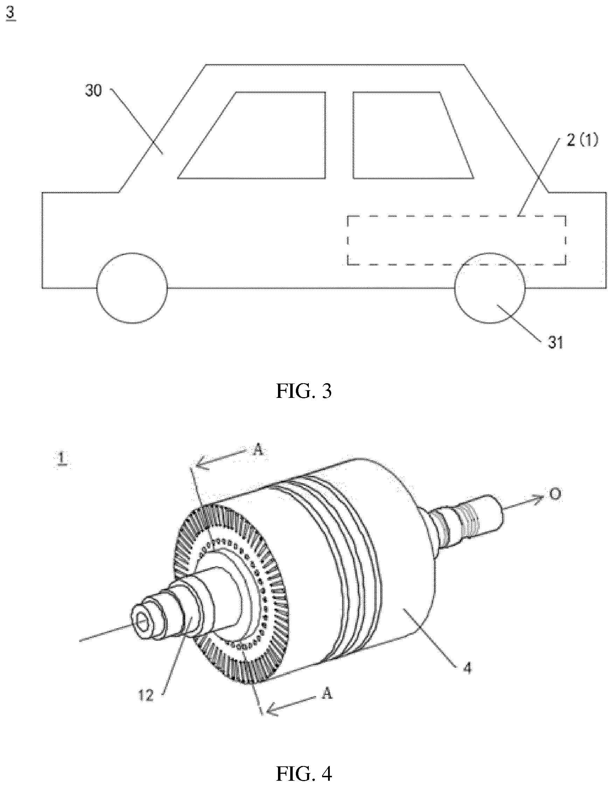

In a possible implementation, a wheel drive shaft 201 is disposed in the transmission 20, and the wheel drive shaft 201 provides power for wheels 31 after receiving power output by the oil-cooled motor 1. In this implementation, a gear component (not shown in the figure) is disposed in the transmission 20 to implement power transfer between the oil-cooled motor 1 and the wheel drive shaft 201. In this implementation, the powertrain 2 is used in a vehicle 3 (as shown in FIG. 3), to provide power for the vehicle 3. In some implementations, the powertrain 2 may be further used in another electric device, and the powertrain 2 provides power to the another electric device after the power output by the oil-cooled motor 1 passes through the transmission 20, to provide power for the electric device. A gear structure or a transmission structure in the transmission 20 may be set according to a requirement of the vehicle 3 or another electric device.

In a possible implementation, the powertrain 2 further includes an engine 21 and a generator 22. The engine 21 is in a transmission connection to an engine input shaft 200a in the transmission 20, and is configured to output power to the engine input shaft 200a. The generator 22 is in a transmission connection to the engine 21 by using a gear component in the transmission 20. Power output by the engine 21 is transmitted to the generator 22 by using the transmission 20, and the generator 22 generates power and is configured to store electric energy in a power battery to charge the power battery. It should be noted that the powertrain 2 provided in FIG. 2 includes the engine 21 and the generator 22, and the powertrain 2 is a hybrid power system. In some implementations, the engine 21 and the generator 22 may not be disposed, and only the oil-cooled motor 1 and the transmission 20 are included. In this case, the powertrain 2 is a pure electric system.

In a possible implementation, the powertrain 2 further includes at least one of a motor control unit (Motor Control Unit, MCU), an on-board charger (On-Board Charger, OBC), a direct current-direct current (DC-DC) converter, a power distribution unit (Power Distribution Unit, PDU), and a battery control unit (Battery Control Unit, BCU). The powertrain 2 may integrate at least one of the foregoing components as required.

FIG. 3 is a schematic diagram of a structure of the vehicle 3 according to an embodiment of this application. The vehicle 3 includes a vehicle body 30, wheels 31, and a powertrain 2, and the powertrain 2 is mounted on the vehicle body 30. In some implementations, the vehicle 3 includes a vehicle body 30, wheels 31, and an oil-cooled motor 1, and the oil-cooled motor 1 is mounted on the vehicle body 30. The powertrain 2 includes the oil-cooled motor 1 in this application. Using the oil-cooled motor 1 in this application can reduce and improve heat dissipation effect inside the motor. The vehicle 3 is a wheeled vehicle 3 that is driven or guided by a power apparatus and is used for passengers traveling on a road or for transporting articles and performing special engineering operations. The vehicle 3 includes an electric car/electric vehicle (Electric Vehicle, EV for short), a pure electric vehicle/battery electric vehicle (Pure Electric Vehicle /Battery Electric Vehicle, PEV/BEV for short), a hybrid electric vehicle (Hybrid Electric Vehicle, HEV for short), a range extended electric vehicle (Range Extended Electric Vehicle, REEV for short), a plug-in hybrid electric vehicle (Plug-in Hybrid Electric Vehicle, PHEV for short), a new energy vehicle (New Energy Vehicle), and the like. In some implementations, the vehicle 3 includes a three-wheeled or four-wheeled vehicle 3. The vehicle 3 includes a sedan, an off-road vehicle, a bus, a truck, and the like. The vehicle 3 also includes various special operation vehicles with specific functions, such as an engineering rescue vehicle, a sprinkler, a sewage sucker, a cement mixer, a crane, and a medical vehicle. The vehicle 3 may alternatively be a robot that can travel. In this embodiment, the vehicle 3 is a car. The powertrain 2 can drive the wheels 31 to rotate. The vehicle 3 may have two or more wheels 31. This is not limited in this application. In an implementation, the vehicle 3 may further include more than one powertrain 2. This is not limited in this application.

When the vehicle 3 travels, the oil-cooled motor 1 in the powertrain 2 provides power for the wheels 31. In a running process of the oil-cooled motor 1, heat is generated inside the oil-cooled motor 1. In this case, cooling oil is usually used for cooling and heat dissipation. However, cooling effect of the oil-cooled motor 1 is limited by a contact area between the cooling oil and the interior of a heating device. If extremely many oil channels are disposed on the heating device, structural strength and magnetic conductivity of the device are deteriorated. However, reducing a quantity of oil channels makes the contact area between the cooling oil and the oil channel smaller, and makes heat dissipation effect not ideal.

In this application, the oil-cooled motor 1 is improved, so that a relationship between structural strength, magnetic conductivity, and cooling effect of an internal component of the oil-cooled motor 1 can be balanced. This improves heat dissipation effect of the cooling oil.

The following describes in detail the oil-cooled motor 1 in this application.

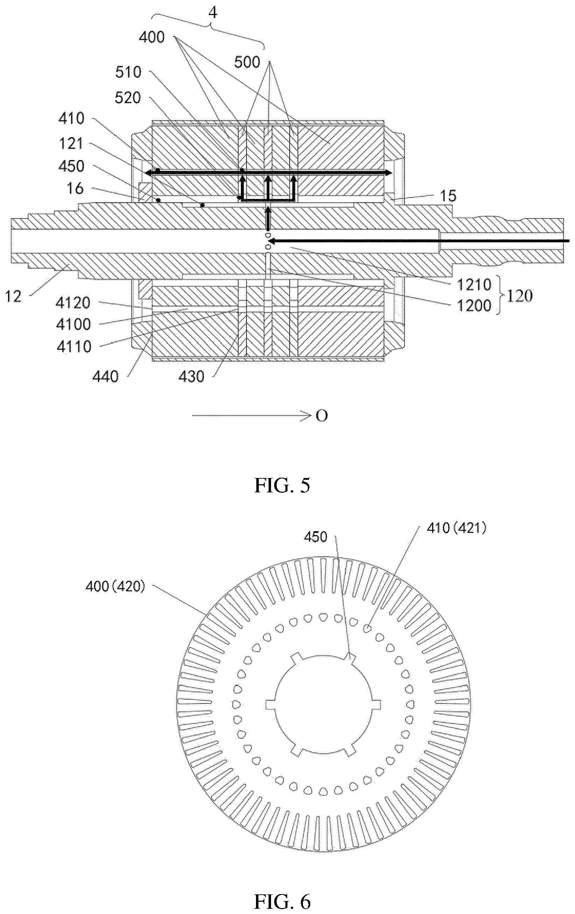

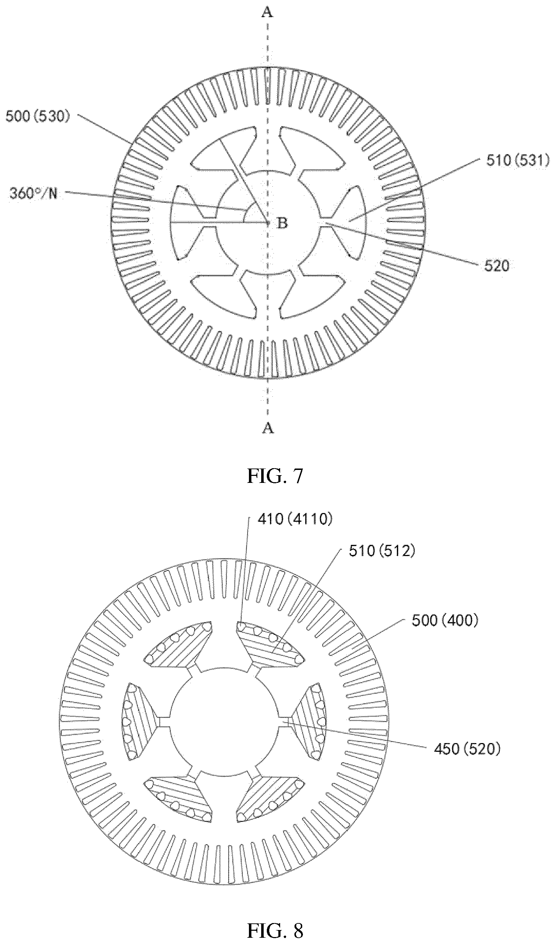

Refer to FIG.4 to FIG. 8. FIG. 4 is a schematic diagram of structures of a rotor 4 and a rotating shaft 12 in the oil-cooled motor 1 according to a first embodiment of this application. FIG. 5 is an A-A sectional view of the rotor and the rotating shaft 12 shown in FIG. 4. FIG. 6 is a schematic diagram of a structure of a first rotor iron core 400 in the oil-cooled motor 1 according to the first embodiment of this application. FIG. 7 is a schematic diagram of a structure of a second rotor iron core 500 in the oil-cooled motor 1 according to the first embodiment of this application. FIG. 8 is an axial projection diagram of the first rotor iron core 400 and the second rotor iron core 500 according to the first embodiment of this application.

In the first embodiment, this application provides the oil-cooled motor 1. The oil-cooled motor 1 includes the rotating shaft 12 and the rotor 4 (as shown in FIG. 4). The rotor 4 includes the first rotor iron core 400 and the second rotor iron core 500 (as shown in FIG. 5). Both the first rotor iron core 400 and the second rotor iron core 500 are sleeved on the rotating shaft 12, and the first rotor iron core 400 is adjacent to the second rotor iron core 500 (as shown in FIG. 5). In this embodiment, as shown in FIG. 5, the oil-cooled motor 1 has four first rotor iron cores 400 and three second rotor iron cores 500, and the four first rotor iron cores 400 and the three second rotor iron cores 500 are alternately arranged in an axial direction O of the rotating shaft 12. In other embodiments, there may be only one first rotor iron core 400 and one second rotor iron core 500, or other quantities of iron cores are combined.

The rotating shaft 12 is provided with a rotating shaft oil channel 120 (as shown in FIG. 5). M first oil channels 410 (as shown in FIG. 6) are disposed in the first rotor iron core 400, and each first oil channel 410 penetrates through two end faces (as shown in FIG. 5) of the first rotor iron core 400. N second oil channels 510 (as shown in FIG. 7) are disposed in the second rotor iron core 500. N openings 520 (as shown in FIG. 7) are disposed on an inner circumferential surface that is of the second rotor iron core 500 and that faces the rotating shaft 12. The N openings 520 are in one-to-one communication with the N second oil channels 510 (as shown in FIG. 7). All the N openings 520 communicate with the rotating shaft oil channels 120 (as shown in FIG. 5), and each second oil channel 510 communicates with a plurality of first oil channels 410 (as shown in FIG. 8). M and N are both positive integers, and M is greater than N.

In this implementation, the first rotor iron core 400 and the second rotor iron core 500 are stacked in the axial direction O of the rotating shaft 12 to form the rotor 4 of the oil-cooled motor 1. The axial direction O of the rotating shaft 12 is also an axial direction O of the first rotor iron core 400 and the second rotor iron core 500. A circumferential direction C of the rotating shaft 12 is also a circumferential direction C of the first rotor iron core 400 and the second rotor iron core 500. A radial direction R of the rotating shaft 12 is also a radial direction R of the first rotor iron core 400 and the second rotor iron core 500.

In this implementation, when the oil-cooled motor 1 operates, the rotor 4, the stator 10, and the winding generate heat, and an oil pump 140 in the cooling system 14 provides power to drive the cooling oil into the rotating shaft oil channel 120. A black arrow in FIG. 5 shows a circulation path of the cooling oil. The opening 520 separately communicates with the rotating shaft oil channel 120 and the second oil channel 510. The opening 520 can guide a flow direction of the cooling oil, so that the cooling oil flows to each of the N second oil channels 510 after flowing through the opening 520. At least one of the N second oil channels 510 communicates with the plurality of first oil channels 410, so that the cooling oil enters the first oil channels 410 that communicate with the second oil channel 510. The cooling oil passes through the foregoing oil path, and is directly in contact with the rotor 4 in different directions inside the rotor 4. This helps improve heat dissipation effect. After flowing out of the first oil channel 410, due to centrifugal force, the cooling oil is sprayed to surfaces of the stator 10 and the winding through the first oil channel 410, to cool the stator 10 and the winding. Finally, the cooling oil flows back to a cooler 141 in the cooling system 14, and enters the rotating shaft oil channel 120 again to complete a cooling circulation process. This improves utilization of the cooling oil.

In an implementation, each of the plurality of second oil channels 510 communicates with at least two first oil channels 410. In an implementation, there may be three or more first oil channels 410 that communicate with each of the plurality of second oil channels 510. As shown in FIG. 8, five first oil channels 410 communicate with each of the plurality of second oil channels 510. It should be noted that FIG. 8 merely schematically shows a quantity of first oil channels 410 that communicate with the second oil channel 510. A person skilled in the art may adjust the quantity according to an actual requirement. This is not limited in this application.

In an implementation, the first rotor iron core 400 includes a plurality of first laminations 420 (as shown in FIG. 6) that are stacked in the axial direction O of the rotating shaft 12. Each of the plurality of first laminations 420 is provided with a plurality of first oil holes 421. The first oil holes 421 of the plurality of first laminations 420 are stacked in the axial direction O of the rotating shaft 12 to form the first oil channel 410.

In an implementation, a quantity of first laminations 420 and thicknesses of the first laminations may be selected according to a requirement, to adapt to the first rotor iron core 400 of a corresponding thickness. For example, a thickness of the first lamination 420 is 0.3 millimeters, and a quantity of the first lamination 420 is 10.

In an implementation, the second rotor iron core 500 includes a plurality of second laminations 530 (as shown in FIG. 7) that are stacked in the axial direction O of the rotating shaft 12. Each of the plurality of second laminations 530 is provided with a plurality of second oil holes 531. The plurality of second oil holes 531 of different second laminations 530 are stacked in the axial direction O of the rotating shaft 12 to form the second oil channel 510.

In an implementation, the first lamination 420 and the second lamination 530 may be silicon steel sheets.

In an implementation, the plurality of first oil holes 421 of different first laminations 420 are aligned in the axial direction O of the rotating shaft 12, and the plurality of second oil holes 531 of different second laminations 530 are aligned in the axial direction O of the rotating shaft 12. In this way, the first oil channel 410 and the second oil channel 510 extend in the axial direction O of the rotating shaft 12, that is, the first oil channel 410 and the second oil channel 510 are in a straight line shape. This implementation helps reduce resistance on the cooling oil when the cooling oil flows between the first oil channel 410 and the second oil channel 510.

In some other implementations, the plurality of first oil holes 421 of different first laminations 420 may be disposed in a staggered manner, and the plurality of second oil holes 531 of different second laminations 530 may be disposed in a staggered manner. In this way, the first oil channel 410 and the second oil channel 510 are arc-shaped, so that an oil channel path is extended.

In an implementation, positioning components (not shown in the figure) are disposed at corresponding positions on the first lamination 420 and the second lamination 530. The first lamination 420 and the second lamination 530 are respectively stacked in the axial direction O of the rotating shaft 12 by using the positioning components to form the first rotor iron core 400 and the second rotor iron core 500.

In this application, one second oil channel 510 communicates with at least two first oil channels 410. In this case, compared with the technical solution in which the second oil channel 510 communicates with the first oil channel 410 in a one-to-one correspondence, in this solution, fewer second oil channels 510 may be disposed. When there are more second oil channels 510 in the second rotor iron core 500, an aperture of each second oil channel 510 is smaller. This not only affects a flow speed of a coolant, but also reduces structural strength of the second rotor iron core 500, and affects magnetic conductivity. When a quantity of first oil channels 410 and a quantity of second oil channels 510 are smaller, cooling effect is worse. In this solution, a quantity of second oil channels 510 decreases relative to that of first oil channels 410, so that negative impact caused by oil channel disposing on structural strength and magnetic conductivity of the second rotor iron core 500 can be reduced. In addition, in this application, a quantity of first oil channels 410 that correspondingly communicate with a single second oil channel 510 is large, so that a contact area between the cooling oil and the first rotor iron core 400 is increased. This improves heat dissipation effect on the first rotor iron core 400.

In addition, when the second oil channel 510 communicates with the first oil channel 410 in a one-to-one correspondence, and an aperture of the first oil channel 410 in the first rotor iron core 400 is increased to improve cooling effect, although a flow rate and a contact area of the cooling oil in the first rotor iron core 400 are increased, because the first rotor iron core 400 is mainly used to conduct a magnetic line, no magnetic line is conducted in a vacant part of the first rotor iron core 400 due to oil channel aperture increasing. In this way, structural strength and magnetic conductivity of the rotor 4 are reduced accordingly.

However, in this application, the plurality of first oil channels 410 communicate with one second oil channel 510, so that cooling effect can be improved, the rotor 4 operates within a proper temperature range, and structural strength and magnetic conductivity of the first rotor iron core 400 can be ensured. In addition, the quantity of second oil channels 510 is reduced, so that structural strength of the second rotor iron core 500 is ensured. This helps balance a contradiction relationship between the structural strength and the magnetic conductivity and the cooling effect, and improve operating efficiency of the rotor 4. In addition, both the first oil channel 410 and the second oil channel 510 are disposed inside the rotor 4, and no additional cooling oil channel needs to be disposed. This helps reduce an overall size of the oil-cooled motor 1 and reduce manufacturing costs.

Still refer to FIG. 7. In a possible implementation, the N second oil channels 510 jointly form an axisymmetric structure, and an axis B of the second rotor iron core 500 is located on an axis of symmetry AA of the axisymmetric structure. In this implementation, the axisymmetric structure jointly formed by using the N second oil channels 510 is symmetric with respect to the axis of symmetry AA, where an axis B of the second rotor iron core 500 is located on the axis of symmetry AA. It may be understood that the axis B of the second rotor iron core 500 is also located in the axial direction O of the rotating shaft. In this solution, the N second oil channels 510 are disposed in an axisymmetric structure, so that processing process difficulty of the second rotor iron core 500 can be reduced, and heat dissipation of the second rotor iron core 500 is more uniform. In this way, amount of cooling oil entering the first oil channel 410 in the first rotor iron core 400 is more uniform, and heat dissipation uniformity of the first rotor iron core 400 is improved.

It should be noted that, the axisymmetric structure jointly formed by using the N second oil channels 510 is not limited to the structure shown in FIG. 7. A quantity and shapes of second oil channels 510 may alternatively be changed, but the second oil channels 510 integrally form an axisymmetric structure.

Still refer to FIG. 7. In a possible implementation, the N second oil channels 510 jointly form a rotational symmetry structure, and a rotation center of the rotational symmetry structure is the axis B of the second rotor iron core 500. In this implementation, the rotational symmetry structure jointly formed by using the N second oil channels 510 is distributed in a rotationally symmetrical manner with respect to the axis B of the second rotor iron core. In this solution, the second oil channels 510 are distributed in the rotationally symmetrical manner, so that processing process difficulty of the second rotor iron core 500 can be reduced. In addition, because the second oil channels 510 are uniformly distributed on a peripheral side of the axis B, the cooling oil can flow out from different parts of the rotor. This helps the cooling oil to uniformly absorb heat inside the rotor, and provides an important guarantee for heat dissipation effect of the oil-cooled motor.

Still refer to FIG. 7. In a possible implementation, the N second oil channels 510 jointly form a 360°/N rotational symmetry structure. In this implementation, the 360°/N rotational symmetry structure jointly formed by using the N second oil channels 510 is distributed in a rotationally symmetrical manner with respect to the axis B of the second rotor iron core, and an included angle between two adjacent second oil channels 510 is 360°/N. For example, as shown in FIG. 7, a quantity of second oil channels 510 is 6, an included angle between two adjacent second oil channels 510 is 60°, and after the second rotor iron core 500 is rotated by 60°, the second oil channel 510 coincides with the adjacent second oil channel 510. In this solution, the second oil channels 510 are distributed in the 360°/N rotationally symmetrical manner, so that processing process difficulty of the second rotor iron core 500 can be reduced. In addition, because the second oil channels 510 are uniformly distributed on a peripheral side of the axis B, the cooling oil can flow out from different parts of the rotor. This helps the cooling oil to uniformly absorb heat inside the rotor, and provides an important guarantee for heat dissipation effect of the oil-cooled motor.

It should be noted that, due to impact of factors such as an assembly tolerance, a design tolerance, and a structural flatness, or because density of the second rotor iron core 500 is not absolutely uniformly distributed, and each second oil channel 510 is not absolutely the same, in this implementation, the included angle between two adjacent second oil channels 510 is not absolutely equal to 360°/N, and a deviation to a specific extent may exist. It should be understood by a person skilled in the art that such deviation is inevitable and acceptable. "360°/N" described in this implementation is determined based on theoretical knowledge. With reference to an actual situation, there is a difference between an actual value and the value, and the difference may also be referred to as an error or a tolerance. In some implementations, the included angle between two adjacent second oil channels 510 may positively or negatively deviate from 0 to 10% of 360°/N. In this case, the adjacent second oil channels 510 belong to a 360°/N rotational symmetry structure.

It should be noted that, the rotational symmetry structure jointly formed by using the N second oil channels 510 is not limited to the structure shown in FIG. 7. A quantity and shapes of second oil channels 510 may alternatively be changed, but the second oil channels 510 integrally form a rotational symmetry structure.

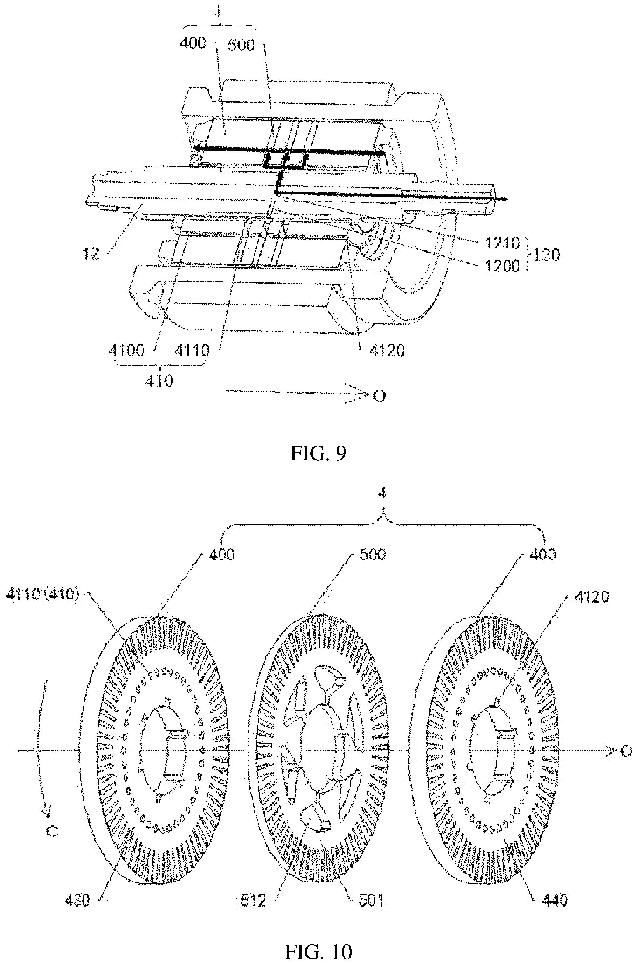

Refer to FIG. 8 to FIG. 10. FIG. 9 is a sectional view of the oil-cooled motor 1 according to the first embodiment of this application. FIG. 10 is a partial exploded view of the rotor 4 in the oil-cooled motor 1 according to the first embodiment of this application. In a possible implementation, the first rotor iron core 400 is provided with a first rotor end face 430 (as shown in FIG. 10) facing the second rotor iron core 500, and the second rotor iron core 500 is provided with a second rotor end face 501 (as shown in FIG. 10) facing the first rotor iron core 400. An outlet of the second oil channel 510 is located on the second rotor end face 501 (as shown in FIG. 10), and an inlet of the first oil channel 410 is located on the first rotor end face 430 (as shown in FIG. 10). At least a part of the inlet of each of more than two first oil channels 410 is located in a projection region (as shown in FIG. 8) of the second oil channel 510. The projection region of the second oil channel 510 is a region that is enclosed by a projection, on the first rotor end face 430, of an edge of the outlet of the second oil channel 510 in the axial direction O of the rotating shaft.

In this implementation, each of the plurality of first oil channels 410 includes a first oil channel body 4100 and a first oil channel inlet 4110 (as shown in FIG. 9) located at an end of the first oil channel body 4100. The first oil channel inlet 4110 is the inlet of the first oil channel 410. Two end faces that are of the first rotor iron core 400 and that are disposed opposite to each other in the axial direction O of the rotating shaft 12 include a first rotor end face 430 disposed close to the second rotor iron core 500 (as shown in FIG. 10), and the first oil channel inlet 4110 is located in the first rotor end face 430 (as shown in FIG. 10).

The second rotor iron core 500 includes a second rotor end face 501 disposed close to the first rotor iron core 400. The second oil channel 510 includes a second oil channel opening 512 (as shown in FIG. 10) located in the second rotor end face 501, and the second oil channel opening 512 is the outlet of the second oil channel 510. In the first embodiment, because the first rotor iron cores 400 are disposed on both sides of the second rotor iron core 500, the second oil channel 510 penetrates through two end faces that are of the second rotor iron core 500 and that are disposed opposite to each other in the axial direction O. One second oil channel opening 512 is separately provided on two ends of the second oil channel 510, and each second oil channel opening 512 corresponds to one first rotor iron core 400 adjacent to the second oil channel opening 512.

A projection region, on the first rotor end face 430, of the second oil channel opening 512 in the axial direction O of the rotating shaft 12 covers at least two first oil channel inlets 4110 (as shown in FIG. 8), and the second oil channel opening 512 communicates with the at least two first oil channel inlets 4110 (as shown in FIG. 8).

In this implementation, the first oil channel inlet 4110 communicates with the first oil channel body 4100, and at least two first oil channel inlets 4110 correspondingly communicate with one second oil channel 510 (as shown in FIG. 8), so that after flowing to the second oil channel 510, the cooling oil may enter the corresponding first oil channel body 4100 through the at least two first oil channel inlets 4110, and exchange heat with a peripheral sidewall of the first oil channel body 4100, to implement heat dissipation inside the first rotor iron core 400.

In this implementation, the first rotor end face 430 is attached to the second rotor iron core 500 (as shown in FIG. 5), so that the cooling oil can smoothly flow into the first oil channel inlet 4110 located on the first rotor end face 430 after entering the second oil channel 510. This reduces resistance on the cooling oil when the cooling oil flows inside the rotor 4.

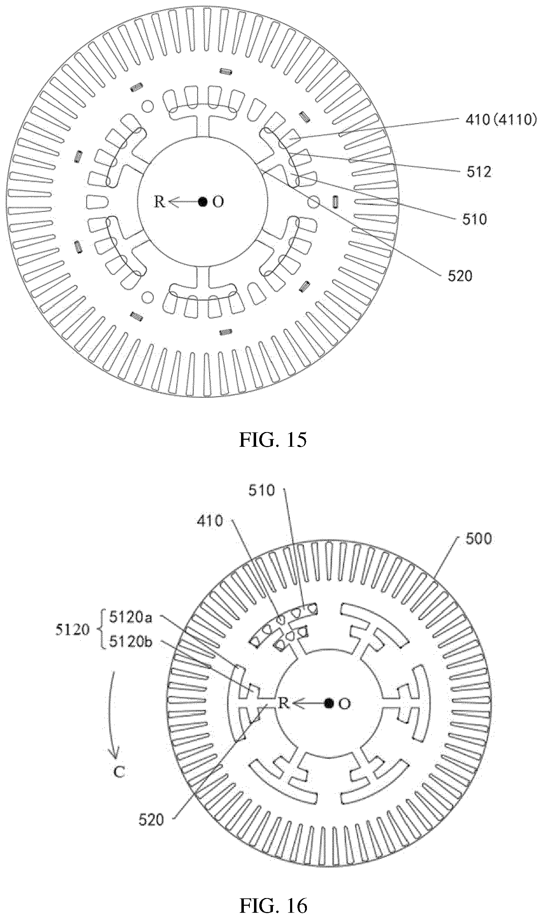

In an implementation, the projection region, on the first rotor end face 430, of the second oil channel opening 512 in the axial direction O of the rotating shaft 12 covers a part (as shown in FIG. 15) of each of the at least two first oil channel inlets 4110.

In an implementation, each of the plurality of first oil channels 410 includes a first outlet 4120 (as shown in FIG. 5) that is located at an end of the first oil channel body 4100 and that is disposed opposite to the first oil channel inlet 4110. Two end faces that are of the first rotor iron core 400 and that are disposed opposite to each other in the axial direction of the first rotor iron core 400 include a second end face 440 that is disposed away from the second rotor iron core 500, and the first outlet 4120 is located in the second end face 440. In this implementation, when the cooling oil flows to the first outlet 4120, due to effect of centrifugal force, the cooling oil is thrown out of the rotor 4, and is sprayed to the stator 10 and the winding, to cool the stator 10 and the winding. In an implementation, the first outlet 4120 is a diagonal hole that is provided toward the stator 10. This helps improve spraying effect after the cooling oil flows out of the second oil channel 510.

Refer to FIG. 8 and FIG. 9. In a possible implementation, the first oil channel body 4100 extends in the axial direction of the rotating shaft 12 (as shown in FIG. 9). In this implementation, the first oil channel body 4100 extends in the axial direction O of the rotating shaft 12, which is equivalent to the following: That the first oil channel 410 extends in the axial direction O of the rotating shaft 12. In this case, projections, on the first rotor end face 430, of at least two first oil channels 410 in the axial direction O of the rotating shaft 12 are located in the second oil channel 510 (as shown in FIG. 8). In this solution, the first oil channel 410 is disposed to extend in the axial direction O of the rotating shaft 12, so that resistance on the cooling oil when the cooling oil flows in the first oil channel 410 can be reduced, and processing process difficulty of the first rotor iron core 400 can be reduced. In some other implementations, an extension path of the first oil channel body 4100 may be any curve or a diagonal line, that is, an extension direction of the first oil channel 410 intersects an axial direction of the first rotor iron core 400. In this solution, a length of the first oil channel 410 can be increased, and a contact area between the cooling oil and the first oil channel 410 can be increased, to improve cooling effect.

In this implementation, a cross section of the first oil channel 410 is circular. In some other implementations, the cross section of the first oil channel 410 may be oval, semicircular, or square. The cross section of the first oil channel 410 is perpendicular to the axial direction O of the rotating shaft 12.

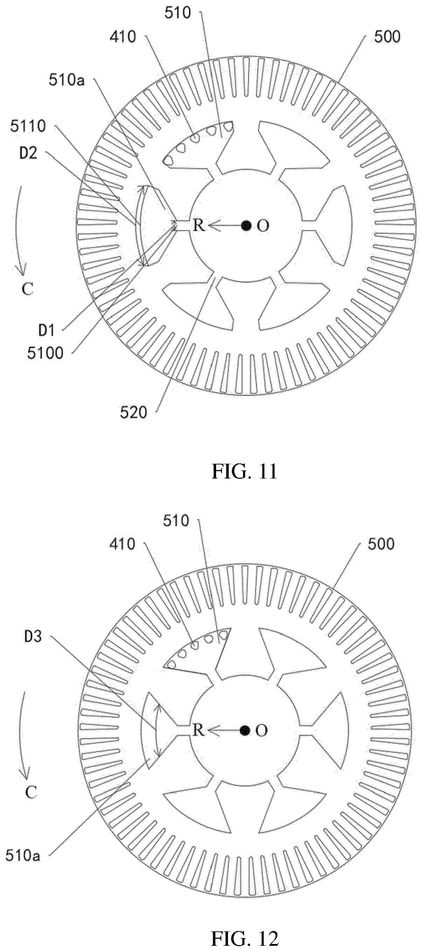

FIG. 11 is a schematic diagram of a structure of the rotor 4 in the oil-cooled motor 1 according to the first embodiment of this application. In a possible implementation, the second oil channel 510 includes a first end 5100 and a second end 5110 that are disposed opposite to each other in the radial direction R of the rotating shaft 12. The first end 5100 communicates with an end that is of the opening 520 and that is far away from the rotating shaft 12, and the first end 5100 is closer to the rotating shaft 12 than the second end 5110. At least a part of the N second oil channels 510 are featured oil channels 510a. In the featured oil channel 510a, a width of the second end 5110 in a rotation direction of the second rotor iron core 500 is greater than a width of the first end 5100 in the rotation direction of the second rotor iron core 500.

The rotation direction of the second rotor iron core 500 is a circumferential direction C of the second rotor iron core 500.

In this implementation, a width of the first end 5100 in the rotation direction of the second rotor iron core 500 is D1, and a width of the second end 5110 in the rotation direction of the second rotor iron core 500 is D2. Because a length of a circumference that is of the second rotor iron core 500 and that is close to the axis O is small, a length of a circumference that is of the second rotor iron core 500 and that is away from the axis O is large. D2 is set to be greater than D1, so that an opening area of a part close to an axial direction O is small. This helps ensure structural strength. If the circumference close to the axis O is set to be large, structural strength of a part close to the inner circumference becomes poor.

In an implementation, the projection region, on the first rotor end face 430, of the first oil channel 410 in the axial direction O of the rotating shaft 12 is close to the second end 5110 and away from the first end 5100. D2 is set to be greater than D1, so that space is provided for the second oil channel 510 to communicate with more first oil channels 410.

In an implementation, an extension path of a side wall between the first end 5100 and the second end 5110 may be a broken line. In this case, the second oil channel 510 is integrally in a hammer shape. In some other implementations, the extension path of the side wall that is of the second oil channel 510 and that is between the first end 5100 and the second end 5110 may be any curve, including but not limited to an arc and a wavy line.

A quantity of second oil channels 510 in the second rotor iron core 500 may be set randomly. As shown in FIG. 11, the quantity of second oil channels 510 is 6, and the six second oil channels 510 are disposed at intervals in the circumferential direction C around the axis O of the rotating shaft 12. It should be noted that FIG. 11 merely schematically shows a quantity of second oil channels 510. A person skilled in the art may adjust the quantity according to an actual requirement. This is not limited in this application.

In this implementation, when the cooling oil dissipates heat for the rotor 4, the cooling oil needs to fill the second oil channel 510 in the radial direction to a specific depth before entering the first oil channel 410 smoothly. In one aspect, continuity of the cooling oil in the first oil channel 410 can be ensured, so that the cooling oil does not easily generate an air column in a circulation process. In another aspect, the cooling oil is sufficiently in contact with a side wall of the second oil channel 510. This helps increase the contact area between the cooling oil and the second oil channel 510, and further ensures the cooling effect of the cooling oil on the second rotor iron core 500. In still another aspect, when flowing through the second oil channel 510, the cooling oil is further in contact with the first rotor end face 430 of the first rotor ion core 400 in addition to the side wall of the second oil channel 510 of the second rotor iron core 500, so that the first rotor iron core 400 can be cooled and heat-dissipated. In this way, cooling efficiency is improved.

In an implementation, each of the N second oil channels 510 is a featured oil channel 510a, that is, the second oil channel 510 includes a first end 5100 and a second end 5110 that are disposed opposite to each other in the radial direction R of the rotating shaft 12. The first end 5100 is disposed closer to an axis of the rotating shaft 12 than the second end 5110, and the width of the second end 5110 in the rotation direction of the second rotor iron core 500 is greater than the width of the first end 5100 in the rotation direction of the second rotor iron core 500.

In an implementation, each of the N second oil channels 510 is in a hammer shape, so that a contact area between the cooling oil and the interior of the rotor 4 can be further increased, and cooling effect can be improved.

In an implementation, all the second oil channels 510 are featured oil channels 510a.

FIG. 12 is a schematic diagram of a structure of the rotor 4 in the oil-cooled motor 1 according to a second embodiment of this application. Different from the first embodiment, in the second embodiment, in a radial direction R of the second rotor iron core 500, a width of the featured oil channel 510a gradually increases from the first end 5100 to the second end 5110 in the rotation direction of the second rotor iron core 500. A radius direction R of the second rotor iron core 500 is an extension direction of a radius extending from a circle center of the second rotor iron core 500 to a circle edge of the second rotor iron core 500.

In this embodiment, the second oil channel 510 is integrally sector-shaped. A width of the second oil channel 510 in the rotation direction of the second rotor iron core 500 is D3. Because the projection region, on the first rotor end face 430, of the first oil channel 410 in the axial direction O of the rotating shaft 12 is away from an axis of the second rotor iron core 500, D3 is set to linearly increase in a direction away from the axis of the rotating shaft 12 from a direction close to the axis of the rotating shaft 12. This helps provide space for the second oil channel 510 to communicate with more first oil channels 410. In an implementation, D3 may increase nonlinearly in a direction away from the axis of the rotating shaft 12 from the direction close to the axis of the rotating shaft 12.

A quantity of second oil channels 510 in the second rotor iron core 500 may be set randomly. As shown in FIG. 12, the quantity of second oil channels 510 is 6, and the six second oil channels 510 are disposed at intervals in the circumferential direction C around the axis O of the rotating shaft 12. It should be noted that FIG. 12 merely schematically shows a quantity of second oil channels 510. A person skilled in the art may adjust the quantity according to an actual requirement. This is not limited in this application.

In this embodiment, when the cooling oil dissipates heat for the rotor 4, the cooling oil needs to fill the second oil channel 510 in the radial direction R to a specific depth before entering the first oil channel 410 smoothly. In one aspect, continuity of the cooling oil in the first oil channel 410 can be ensured, so that the cooling oil does not easily generate an air column in a circulation process. In another aspect, the cooling oil is sufficiently in contact with a side wall of the second oil channel 510. This helps increase the contact area between the cooling oil and the second oil channel 510, and further ensures the cooling effect of the cooling oil on the rotor 4. In still another aspect, when flowing through the second oil channel 510, the cooling oil is further in contact with the first rotor end face 430 of the first rotor ion core 400 in addition to the side wall of the second oil channel 510 of the second rotor iron core 500, so that the first rotor iron core 400 can be cooled and heat-dissipated. In this way, cooling efficiency is improved.

In an implementation, a width of each of the N second oil channels 510 in the rotation direction of the second rotor iron core 500 gradually increases in a direction away from the axis of the rotating shaft 12 from the direction close to the axis of the rotating shaft 12. In this implementation, each of the N second oil channels 510 is sector-shaped, so that a contact area between the cooling oil and the interior of the rotor 4 can be further increased, and cooling effect can be improved.

It should be noted that, in the first embodiment, an implementable manner, a position relationship, and a structure description of the first rotor iron core 400, the opening 520, the first oil channel 410, the first lamination 420, the first oil channel body 4100, the first oil channel inlet 4110, the first rotor end face 430, the rotating shaft oil channel 120, and the like are applicable to those of the first rotor iron core 400, the opening 520, the first oil channel 410, the first lamination 420, the first oil channel body 4100, the first oil channel inlet 4110, the first rotor end face 430 and the rotating shaft oil channel 120 in the second embodiment. Details are not described herein.

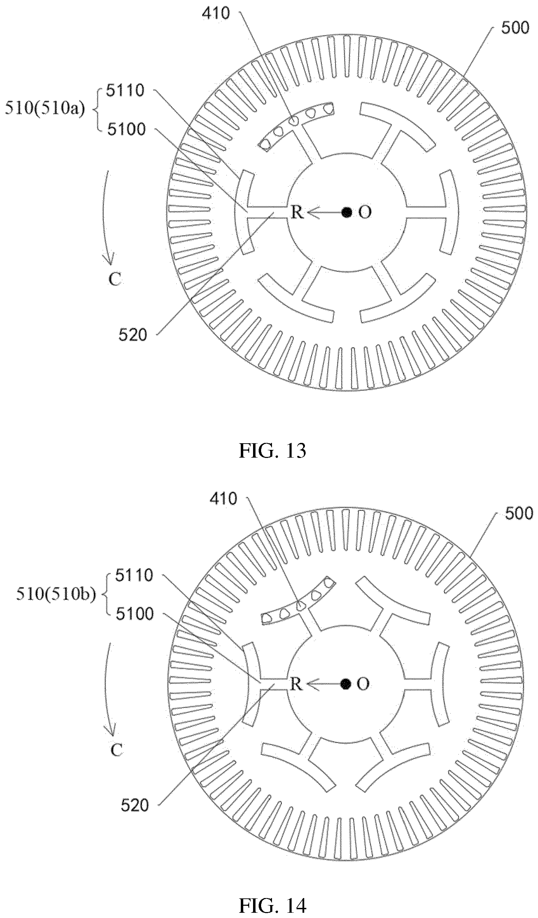

FIG. 13 is a schematic diagram of a structure of the rotor 4 in the oil-cooled motor 1 according to a third embodiment of this application. Different from the second embodiment, in the third embodiment, a cross section of the featured oil channel 510a is arc-shaped, and the cross section of the featured oil channel 510a is perpendicular to the axial direction of the rotating shaft 12.

In the second embodiment, when the cross section of the featured oil channel 510a is sector-shaped, a width of the featured oil channel 510a gradually increases from the first end 5100 to the second end 5110 in the rotation direction of the second rotor iron core 500.

In this embodiment, when the cross section of the featured oil channel 510a is arc-shaped, the second oil channel 510 extends in the circumferential direction C of the rotating shaft 12, and the width of the featured oil channel 510a changes slightly from the first end 5100 to the second end 5110 in the rotation direction of the second rotor iron core 500. The opening 520 extends in the radial direction R of the rotating shaft 12, and an end that is of the opening 520 and that is away from the rotating shaft 12 is adjacent to and communicates with the second oil channel 510. Each of the N second oil channels 510 communicates with at least two first oil channels 410.

In this embodiment, the second oil channel 510 is disposed away from an inner circumferential surface of the second rotor iron core 500. Compared with disposing the second oil channel 510 close to the inner circumferential surface of the second rotor iron core 500, disposing the second oil channel 510 away from the inner circumferential surface of the second rotor iron core 500 helps expand a circumferential size of the second oil channel 510, and provides space for the second oil channel 510 to communicate with more first oil channels 410. The second oil channel 510 communicates with at least two first oil channels 410. Specifically, a projection region, on the first rotor end face 430, of the second oil channel 510 in the axial direction O of the first rotor iron core 400 covers at least two first oil channel inlets 4110.

In this embodiment, when the rotor 4 is cooled, the cooling oil flows into the opening 520, and flows to the second oil channel 510 after being sufficiently in contact with a side wall of the opening 520. In one aspect, because the second oil channel 510 and the opening 520 are integrally in a "T" shape, an area that is of the second rotor iron core 500 and that needs to be occupied by disposing the second oil channel 510 is small, so that great impact on overall strength and magnetic conductivity of the rotor 4 due to oil channel disposing can be avoided. In another aspect, the cooling oil is sufficiently in contact with the second oil channel 510 and an inner wall of the opening 520, so that the contact area between the cooling oil and the second oil channel 510 is increased, and cooling effect of the cooling oil on the rotor 4 is further ensured. In still another aspect, when flowing through the second oil channel 510 and the opening 520, the cooling oil is further in contact with the first rotor end face 430 of the first rotor iron core 400 in addition to the second oil channel 510 and the side wall of the opening 520, so that the first rotor iron core 400 can be cooled and heat-dissipated, and cooling efficiency can be improved.

In an embodiment, when the second rotor iron core 500 is fastened to the rotating shaft 12 through interference, acting force between the rotating shaft 12 and the second rotor iron core 500 is concentrated on a part of the second rotor iron core 500 between two adjacent second oil channels 510. When a radial size of the opening 520 is large, stress in the part of the second rotor iron core 500 between the two adjacent second oil channels 510 is large, so that the second oil channel 510 is close to a through hole for accommodating a magnetic part 600 outside. In this way, the stress in the part of the second rotor iron core 500 between two adjacent second oil channels 510 is transferred to the through hole for accommodating the magnetic part 600. This affects structural strength at the magnetic part 600, and further reduces overall structural strength of the second rotor iron core 500. Therefore, in this embodiment, the second oil channel 510 may be disposed as close as possible to the rotating shaft 12, or the radial size of the opening 520 is set to be small. In a case in which the circumferential size of the second oil channel 510 is the same, the radial size of the opening 520 is set to be short, so that stress can be reduced and structural strength of the second rotor iron core 500 can be ensured.

In an embodiment, when the rotor 4 is fastened to the rotating shaft 12 by using a pin, a fastener, a screw, or the like, the second oil channel 510 is disposed away from the rotating shaft 12 without considering stress generated through interference fitting. This helps ensure structural strength of the second rotor iron core 500.

FIG. 14 is a schematic diagram of a structure of the rotor 4 in the oil-cooled motor 1 according to a fourth embodiment of this application. In a possible implementation, the second oil channel 510 includes a first end 5100 and a second end 5110 that are disposed opposite to each other in the radial direction R of the rotating shaft 12. The first end 5100 communicates with an end that is of the opening 520 and that is far away from the rotating shaft 12, and the first end 5100 is closer to the rotating shaft 12 than the second end 5110. At least a part of the N second oil channels 510 are second featured oil channels 510b. In the second featured oil channel, a width of the first end 5100 in a rotation direction of the second rotor iron core 510 is greater than a width of the second end 5110 in the rotation direction of the second rotor iron core 510.

In this embodiment, the second oil channel 510 shown in FIG. 14 is concave, that is, the second featured oil channel 510b is concave, and the second oil channel 510 shown in FIG. 13 is convex, that is, the featured oil channel 510a is convex. That the second oil channel 510 is concave means that the middle of the second oil channel 510 is closer to an inner circumferential surface of the second rotor iron core 500 than two ends of the second oil channel 510, and the width of the first end 5100 in the rotation direction of the second rotor iron core 510 is greater than the width of the second end 5110 in the rotation direction of the second rotor iron core 510. That the second oil channel 510 is convex means that the middle of the second oil channel 510 is closer to an outer circumferential surface of the second rotor iron core 500 than two ends of the second oil channel 510, and the width of the first end 5100 in the rotation direction of the second rotor iron core 510 is less than the width of the second end 5110 in the rotation direction of the second rotor iron core 510. In some other implementations, an extension path of the second oil channel 510 may be in another curve. It may be understood that, to ensure that the second oil channel 510 communicates with at least two first oil channels 410, a direction in which the at least two first oil channels 410 are arranged needs to be the same as an extension direction of the second oil channel 510 (as shown in FIG. 14).

In the embodiment shown in FIG. 14, the second oil channel 510 covers each of the at least two first oil channels 410. That is, a projection region, in the second oil channel 510, of each first oil channel 410 is located in the second oil channel 510.

In an implementation, all the second oil channels 510 are second featured oil channels 510b.

In an implementation, in the radial direction R of the second rotor iron core 500, the width of the second featured oil channel 510b gradually decreases from the first end 5100 to the second end 5110 in the rotation direction of the second rotor iron core 500. In this implementation, a cross section of the second featured oil channel 510b is sector-shaped (not shown in the figure), so that a contact area between the cooling oil and the interior of the rotor 4 can be further increased, and cooling effect can be improved. It may be understood that, to ensure that the second oil channel 510 communicates with at least two first oil channels 410, a direction in which the at least two first oil channels 410 are arranged needs to be the same as an extension direction of the second oil channel 510.

FIG. 15 is a projection diagram of the rotor 4 in the oil-cooled motor 1 in the axial direction O of the rotating shaft 12 according to a fifth embodiment of this application, and the second oil channel 510 covers a part of each of at least two first oil channels 410. In this embodiment, the second oil channel 510 can alternatively communicate with the first oil channel 410. In this embodiment, the second oil channel 510 communicates with an end that is of the first oil channel 410 and that is close to the rotating shaft 12, so that the second oil channel 510 is disposed closer to the rotating shaft 12. When the second rotor iron core 500 is fastened to the rotating shaft 12 through interference, structural strength can be ensured.

In an implementation, at least a part of the first oil channel inlet 4110 overlaps the outlet of the second oil channel 510 (not shown in the figure). In this implementation, when the cooling oil flows into the opening 520, a part of the cooling oil enters the second oil channel 510 that communicates with the opening 520, and the remaining cooling oil enters the first oil channel inlet 4110 that communicates with the second oil channel 510, so that the cooling oil can flow into the rotor 4 from different positions of the first rotor end face 430 in the axial direction. This further improves heat dissipation effect of the cooling oil and effectively alleviates a problem of local overheating of the rotor 4.

In an implementation, the second oil channel 510 is a featured oil channel 510a.

In an implementation, each of the plurality of second oil channels 510 is a second featured oil channel 510b. In this implementation, each of the plurality of second oil channels 510 and the opening 520 jointly form a "T" shape, so that a relationship between rotor 4 structure strength, magnetic conductivity, and cooling effect can be effectively balanced.

FIG. 16 is a schematic diagram of a structure of the second rotor iron core 500 according to a sixth embodiment of this application. In an implementation, at least one of the plurality of second oil channels 510 includes two sub-oil channels 5120, and the two sub-oil channels 5120 are respectively marked as a first sub-oil channel 5120a and a second sub-oil channel 5120b. An arc length of the first sub-oil channel 5120a is greater than an arc length of the second sub-oil channel 5120b. A quantity of first oil channels 410 in the first sub-oil channel 5120a is greater than a quantity of first oil channels 410 in the second sub-oil channel 5120b.

In this implementation, specifically, projections, on the first rotor end face 430, of the at least two first oil channels 410 in the axial direction of the first rotor iron core 400 are located in the first sub-oil channel 5120a, and projections, on the first rotor end face 430, of the at least two first oil channels 410 in the axial direction O of the first rotor iron core 400 are located in the second sub-oil channel 5120b. The opening 520 communicates with the second sub-oil channel 5120b and the first sub-oil channel 5120a in sequence in the radial direction R of the second rotor iron core 500. When the rotor 4 is cooled, the cooling oil enters the opening 520, flows to the second sub-oil channel 5120b and the first sub-oil channel 5120a in sequence, and finally flows to the first oil channel 410. When flowing through the second oil channel 510, the cooling oil is in contact with the opening 520, a side wall of the second sub-oil channel 5120b, and a side wall of the first sub-oil channel 5120a. This helps cool the second rotor iron core 500 in the radial direction. In addition, the cooling oil is also in contact with the first rotor end face 430 on both sides. This helps cool the first rotor iron core 400 in the radial direction. In this solution, by using the first sub-oil channel 5120a, the second sub-oil channel 5120b, and the opening 520, cooling uniformity of the first rotor iron core 400 and the second rotor iron core 500 can be effectively improved, and temperature distribution inside the rotor 4 can be improved.

In this implementation, because the arc length of the first sub-oil channel 5120a is greater than the arc length of the second sub-oil channel 5120b, the first sub-oil channel 5120a can provide larger space to communicate with the first oil channel 410 relative to the second sub-oil channel 5120b. In this case, if a quantity of first oil channels 410 in the first sub-oil channel 5120a is set to be equal to a quantity of first oil channels 410 in the second sub-oil channel 5120b, spacing between the first oil channels 410 in the second sub-oil channel 5120b is extremely narrow. This increases processing process difficulty and also reduces strength of the inner circumferential surface of the second rotor iron core 500.

The arc length of the first sub-oil channel 5120a is a length, at two ends in the rotation direction of the second rotor iron core 500, of the first sub-oil channel 5120a. The arc length of the second sub-oil channel 5120b is a length, at two ends in the rotation direction of the second rotor iron core 500, of the second sub-oil channel 5120b.

In an implementation, all the second oil channels 510 each include two sub-oil channels 5120.

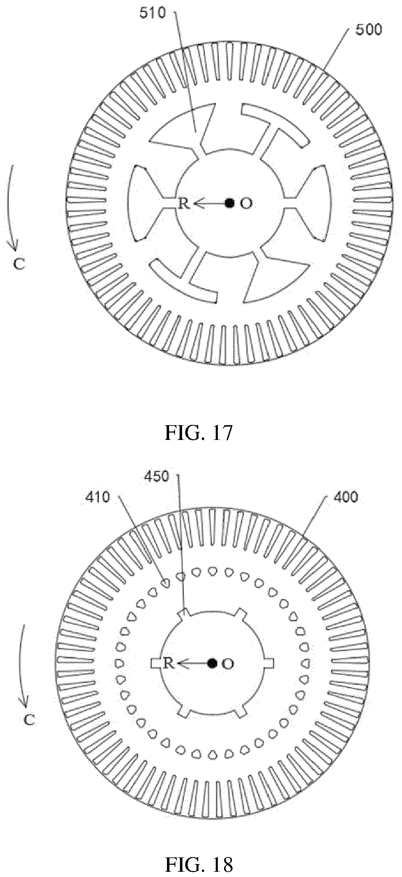

FIG. 17 is a schematic diagram of a structure of the second rotor iron core 500 in the oil-cooled motor 1 according to a seventh embodiment of this application. In an implementation, the second rotor iron core 500 includes at least two types of the three types of second oil channels 510 provided in the first embodiment, the second embodiment, and the third embodiment, and different second oil channels 510 are alternately disposed in a circumferential direction C. FIG. 17 shows only some combinations of the three types of second oil channels 510. A person skilled in the art may select any two or more types of the second oil channels 510 in the first embodiment to the sixth embodiment to be disposed in a combination manner according to an actual requirement. This is not limited in this application.

It should be noted that, in the first embodiment, an implementable manner, a position relationship, and a structure description of the first rotor iron core 400, the opening 520, the first oil channel 410, the first lamination 420, the first oil channel body 4100, the first oil channel inlet 4110, the first rotor end face 430 and the rotating shaft oil channel 120 are applicable to those of the first rotor iron core 400, the opening 520, the first oil channel 410, the first lamination 420, the first oil channel body 4100, the first oil channel inlet 4110, the first rotor end face 430 and the rotating shaft oil channel 120 in the first embodiment to the seventh embodiment. Details are not described herein.

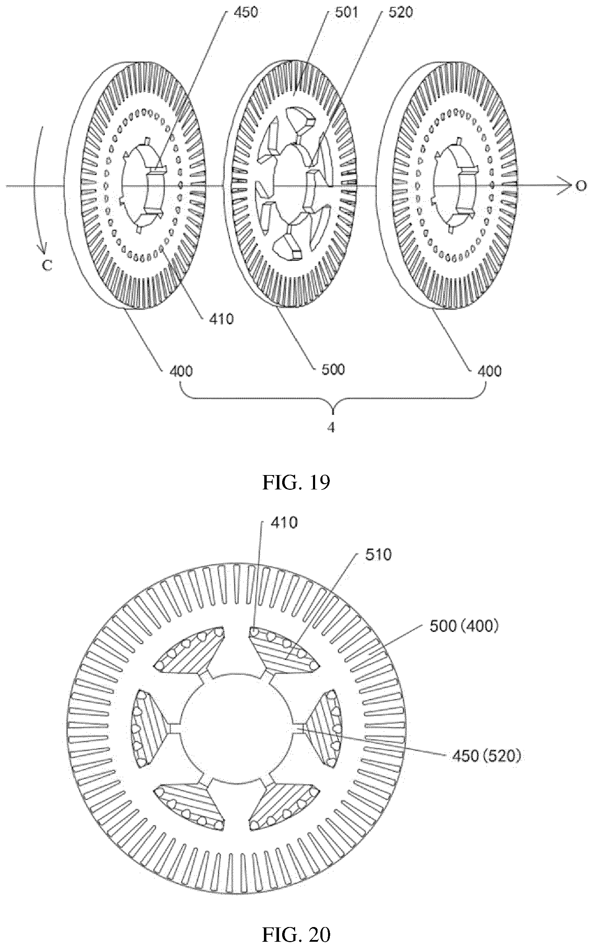

Return to the first embodiment. Refer to FIG. 18 to FIG. 20. FIG. 18 is a schematic diagram of a structure of the first rotor iron core 400 in the oil-cooled motor 1 according to the first embodiment of this application. FIG. 19 is a partial exploded view of the rotor 4 in the oil-cooled motor 1 according to the first embodiment of this application. FIG. 20 is a projection diagram of structures of the first rotor iron core 400 and the second rotor iron core 500 in an axial direction according to the first embodiment of this application.

In a possible implementation, N first oil slots 450 (as shown in FIG. 18) extending in the axial direction O of the rotating shaft 12 are disposed on an inner circumferential surface of the first rotor iron core 400, and the first oil slot 450 is spaced from the first oil channel 410 (as shown in FIG. 18). The opening 520 penetrates through the second rotor iron core 500 in the axial direction O of the rotating shaft 12 (as shown in FIG. 19), and in the axial direction O of the rotating shaft 12, the N openings 520 are in one-to-one communication with the N first oil slots 450 (as shown in FIG. 20).

In this implementation, the opening 520 is provided to penetrate through the second rotor end face 501 that is of the second rotor iron core 500 and that faces the first rotor iron core 400, so that when flowing through the opening 520, the cooling oil may enter, in the axial direction O, the first oil slot 450 provided opposite to the opening 520. In this case, heat exchange is performed between the cooling oil and a slot wall of the first oil slot 450. This helps cool the inner circumferential surface of the first rotor iron core 400 and improve cooling effect.

Refer to FIG. 19 and FIG. 20. In a possible implementation, a plurality of first oil channels 410 are sequentially disposed at intervals around the axis O of the rotating shaft 12 (as shown in FIG. 19), and a plurality of first oil slots 450 are sequentially provided at intervals around the axis O of the rotating shaft 12 (as shown in FIG. 19). A quantity of first oil channels 410 is greater than a quantity of first oil slots 450 (as shown in FIG. 19 and FIG. 20).

In this implementation, the first oil channel 410 is disposed in the circumferential direction C around the axis O of the first rotor iron core 400 (as shown in FIG. 19), so that the cooling oil can flow out from different parts of the rotor 4. This helps the cooling oil to uniformly absorb heat inside the rotor 4, and can prevent a part of the cooling oil from staying in the second oil channel 510, so that heated cooling oil can be discharged from the rotor 4 in a timely manner, and an important guarantee is provided for heat dissipation effect of the oil-cooled motor 1.

In this implementation, because a size of the inner circumferential surface of the first rotor iron core 400 is small, space for providing the first oil slot 450 on the inner circumferential surface of the first rotor iron core 400 is correspondingly small. In this case, if extremely many first oil slots 450 are provided, strength of the inner circumferential surface of the first rotor iron core 400 is reduced.

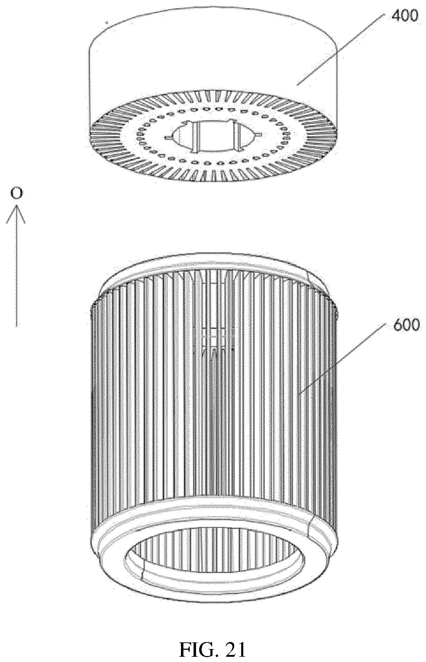

Refer to FIG. 21 to FIG. 23. FIG. 21 is a schematic diagram of structures of the first rotor iron core 400 and the magnetic part 600 according to the first embodiment of this application.

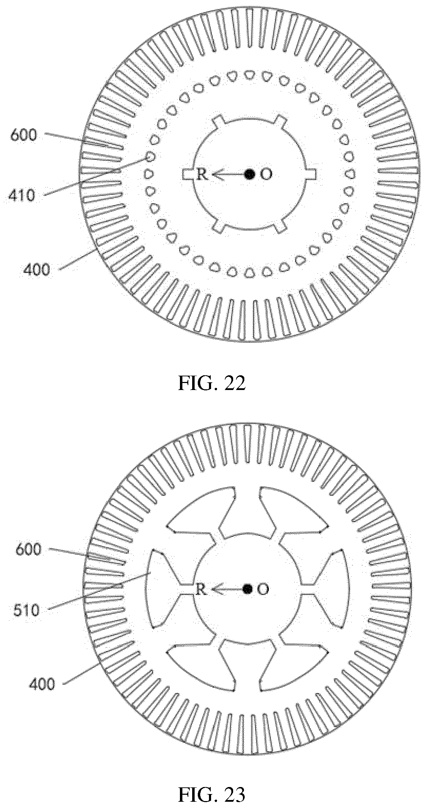

FIG. 22 is a schematic diagram of a structure of the first rotor iron core 400 in the oil-cooled motor 1 according to the first embodiment of this application. FIG. 23 is a schematic diagram of a structure of the second rotor iron core 500 in the oil-cooled motor 1 according to the first embodiment of this application.

In a possible implementation, the oil-cooled motor 1 further includes a plurality of magnetic parts 600 (as shown in FIG. 21). The magnetic parts 600 are configured to generate magnetic force. Each of the plurality of magnetic parts 600 penetrates through the first rotor iron core 400 and the second rotor iron core 500 in the axial direction O of the rotating shaft 12 (as shown in FIG. 21), and the plurality of magnetic parts 600 are sequentially disposed at intervals around the rotating shaft 12 (as shown in FIG. 21). The first oil channel 410 is located between the magnetic part 600 and the inner circumferential surface of the first rotor iron core 400 (as shown in FIG. 22).

In this implementation, the magnetic part 600 may be a magnetic steel or an aluminum strip, and the magnetic part 600 is configured to directly or indirectly generate magnetic force.

In this embodiment, the magnetic part 600 is an aluminum strip (as shown in FIG. 21 to FIG. 23), and the oil-cooled motor 1 is an asynchronous motor. The asynchronous motor is a motor in which a speed of a rotor 4 is less than a rotation speed of a rotating magnetic field generated by the stator 10. A main difference between an asynchronous motor and a synchronous motor lies in a structure of the rotor 4. A rotor of the synchronous motor is inserted with an aluminum strip. After a winding of the stator 10 is powered on, a rotating magnetic field is generated in an air gap between the stator 10 and the rotor 4. The rotor 4 cuts the magnetic field to generate an induced electric potential. Because the rotor 4 is short-circuited, a rotor current is generated. The rotor current interacts with the magnetic field in the air gap to generate an electromagnetic torque, to drive the rotor 4 to rotate.

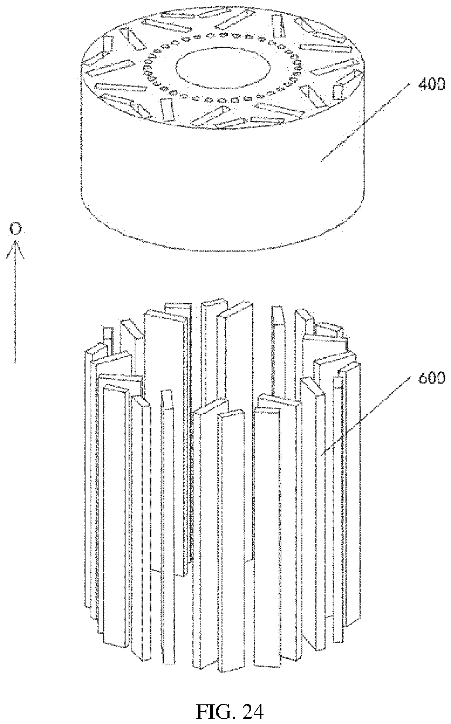

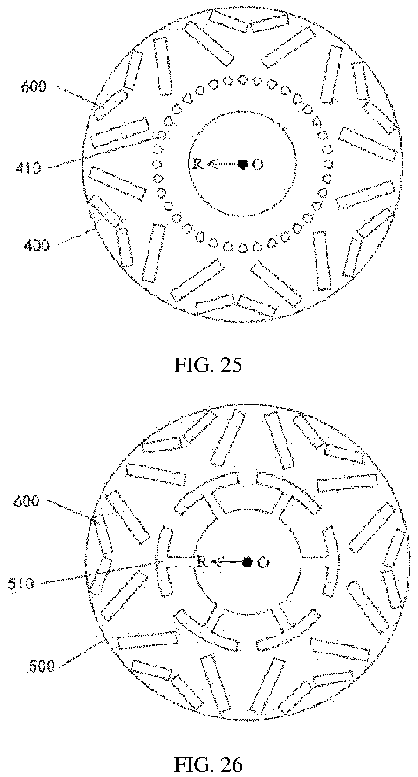

Refer to FIG. 24 to FIG. 26. FIG. 24 is a schematic diagram of structures of the first rotor iron core 400 and the magnetic part 600 according to an eighth embodiment of this application. FIG. 25 is a schematic diagram of a structure of the first rotor iron core 400 in the oil-cooled motor 1 according to an eighth embodiment of this application. FIG. 26 is a schematic diagram of a structure of the second rotor iron core 500 in the oil-cooled motor 1 according to an eighth embodiment of this application. In this implementation, the magnetic part 600 may be magnetic steel, and the magnetic steel can generate magnetic force. When the magnetic part 600 is a magnetic steel (as shown in FIG. 24 to FIG. 26), the oil-cooled motor 1 is a synchronous motor. The synchronous motor is a motor in which a rotation speed of the rotor 4 is consistent with a rotation speed of a rotating magnetic field of the stator 10. A magnetic steel is inserted into the rotor 4 of the synchronous motor, and the rotor 4 has a magnetic field. The magnetic field of the rotor rotates synchronously with the magnetic field of the stator 10 due to magnetic pulling force of the magnetic field of the stator 10.

In this embodiment, two adjacent magnetic steels are distributed in a "V" shape, and are arranged in a double "V" shape. In another embodiment, the magnetic steel may be distributed in a combination of a "linear" shape and a "V" shape, or may be distributed according to a requirement. However, in general, all the magnetic steels are located on an outer axial side that is of the first oil channel 410 and that is away from the rotating shaft 12.

In an implementation, in the radial direction R of the second rotor iron core 500, the second oil channel 510 is located between the magnetic part 600 and the inner circumferential surface of the second rotor iron core 500 (as shown in FIG. 23 and FIG. 26).

In this solution, the first oil channel 410 and the second oil channel 510 are disposed between the magnetic part 600 and the inner circumferential surface of the rotor 4, so that the first oil channel 410 and the second oil channel 510 do not occupy space for disposing the magnetic part 600 on the rotor 4. In this way, magnetic conductivity of the rotor 4 can be effectively ensured and negative impact on the magnetic conductivity caused by disposing an oil channel on the rotor 4 can be avoided. In addition, the second oil channel 510 is disposed close to the magnetic part 600, which helps the cooling oil to cool and dissipate heat for the magnetic part 600, and reduce a temperature of the magnetic part 600.

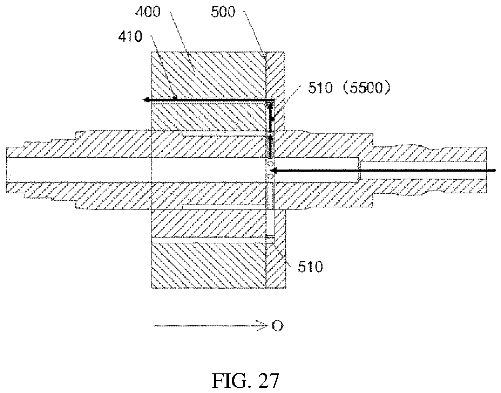

FIG. 27 is a sectional view of the oil-cooled motor 1 according to a ninth embodiment of this application. In this embodiment, the oil-cooled motor 1 includes one first rotor iron core 400 and one second rotor iron core 500. In this implementation, the second oil channel 510 may be a duct 5500 provided on an end face that is of the second rotor iron core 500 and that faces the first rotor iron core 400. In this case, the second oil channel 510 does not penetrate through the second rotor iron core 500. In one aspect, the cooling oil still needs to be in contact with the side wall of the second oil channel 510 first, and then enters the first oil channel 410. Therefore, an end face on which the first rotor iron core 400 is in contact with the second rotor iron core 500 may also be cooled. In another aspect, the cooling oil can be prevented from leaking out of the rotor 4 through the second oil channel 510. In this embodiment, the second oil channel 510 communicates with at least two first oil channels 410, and the second rotor iron core 500 in a shape of the duct 5500 enables a cooling medium to have a large flow area, so that cooling effect on the second rotor iron core 500 is improved. In addition, the at least two first oil channels 410 communicate with the second oil channel 510, so that cooling effect is good while structural strength of the first rotor iron core 400 is ensured.

In an implementation, a shape of the duct 5500 may be a hammer shape, a sector shape, or a "T" shape.

It should be noted that, the implementable manners of the first oil channel 410, the second oil channel 510, and the magnetic part 600 in the first embodiment to the eighth embodiment are also applicable to the ninth embodiment. Details are not described herein again.

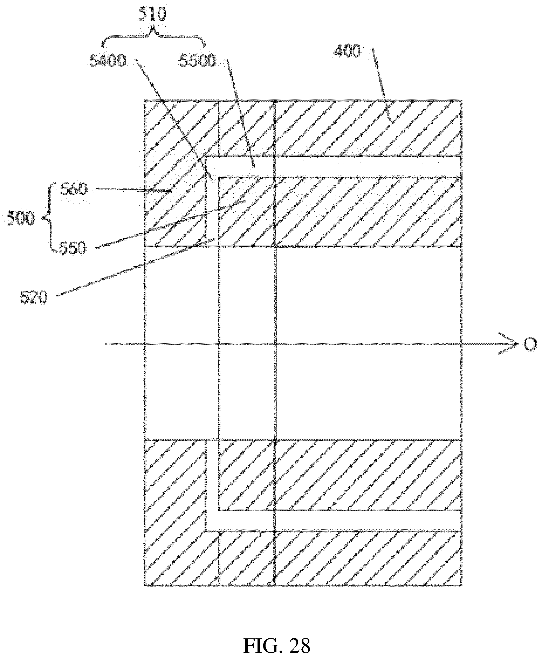

FIG. 28 is a sectional view of the rotor 4 in the oil-cooled motor 1 according to a tenth embodiment of this application. In a possible implementation, the second rotor iron core 500 includes an end iron core sub-part 550 and a middle iron core sub-part 560 that are disposed adjacent to each other in the axial direction O of the rotating shaft 12. The middle iron core sub-part 560 is farther away from the first rotor iron core 400 than the end iron core sub-part 550, and the end iron core sub-part 550 is provided with an end sub-oil channel 5500 that penetrates through the end iron core sub-part 550 in the axial direction O of the rotating shaft 12. The middle iron core sub-part 560 has a groove 5400, a groove opening of the groove 5400 faces the end iron core sub-part 550, and the end sub-oil channel 5500 communicates with the groove 5400 to form the second oil channel 510.

In this implementation, at least a part of the end sub-oil channel 5500 and the groove 5400 overlap, and communicate with each other, so that the cooling oil enters the first rotor iron core 400 through the groove 5400 and the end sub-oil channel 5500, to dissipate heat of the first rotor iron core 400 and the second rotor iron core 500. This solution helps reduce an average volume occupied by disposing the second oil channel 510 on each second rotor iron core 500, so that structural strength and magnetic conductivity of the second rotor iron core 500 are enhanced.

Refer to FIG. 28. In a possible implementation, the opening 520 is provided on the middle iron core sub-part 560, and extends, from an inner circumferential surface of the middle iron core sub-part 560, away from the rotating shaft 12 in a radial direction of the rotating shaft 12. The groove 5400 communicates with the opening 520.

In this implementation, the opening 520 is provided on the inner circumferential surface of the middle iron core sub-part 560, and the opening 520 and the middle iron core sub-part 560 are spaced from each other in the radial direction R of the rotating shaft 12. At least a part of the groove 5400 and the opening 520 overlap, and communicate with each other, and the end sub-oil channel 5500 of the end iron core sub-part 550 communicates with the opening 520 of the end iron core sub-part 550 through the groove 5400 of the middle iron core sub-part 560. The end sub-oil channel 5500 communicates with the first oil channel 410 of the first rotor iron core 400. After flowing through the opening 520, the cooling oil flows through the groove 5400 and the end sub-oil channel 5500 in sequence, and enters the first oil channel 410, to cool and dissipate heat for the interior of the first rotor iron core 400 and the interior of the second rotor iron core 500.

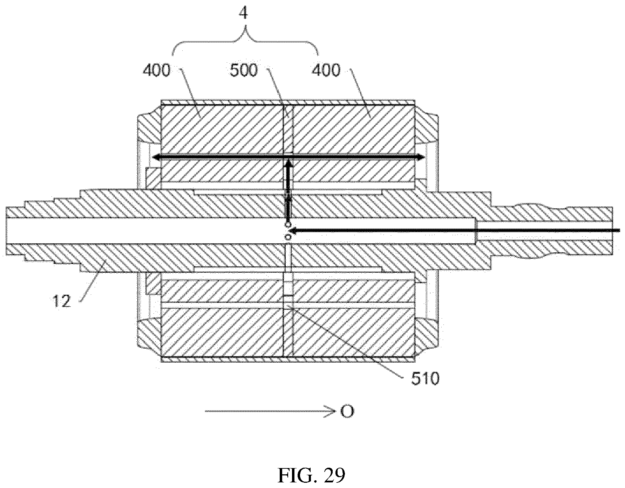

FIG. 29 is a sectional view of the oil-cooled motor 1 according to an eleventh embodiment of this application. In a possible implementation, the oil-cooled motor 1 includes two first rotor iron cores 400 and one second rotor iron core 500 that are all sleeved on the rotating shaft 12. The second rotor iron core 500 is located between the two first rotor iron cores 400. The second oil channel 510 penetrates through the second rotor iron core 500, and the second oil channel 510 separately communicates with a plurality of first oil channels 410 in each first rotor iron core 400.

In this implementation, the second rotor iron core 500 is located in the middle of the rotor 4, and the opening 520 of the second rotor iron core 500 penetrates through two end faces that are of the second rotor iron core 500 and that are disposed opposite to each other in the axial direction O of the rotating shaft 12. When flowing through the second rotor iron core 500, the cooling oil is in contact with a side wall of the second oil channel 510 in a direction from an inner circumferential surface of the second rotor iron core 500 to an outer circumferential surface of the second rotor iron core 500. In addition, the cooling oil is further in contact with end faces of the first rotor iron cores 400 that are located on two sides in the axial direction of the second oil channel 510. When flowing through the first rotor iron cores 400, the cooling oil is in contact with an inner wall of the first oil channel 410 in axial directions of the first rotor iron cores 400. Because at least one of the plurality of second oil channels 510 communicates with at least two first oil channels 410 of the two first rotor iron cores 400, a radial cross section of the at least one of the plurality of second oil channels 510 is greater than a radial cross section of the first oil channel 410. Generally, a temperature of the cooling oil that flows out of the rotor 4 is higher than a temperature of the cooling oil that enters the rotor 4 from the opening 520. Because the cooling oil needs to flow through the opening 520 of the second rotor iron core 500 when entering the rotor 4 from the rotating shaft oil channel 120, the second rotor iron core 500 is disposed in the middle, so that a contact area, in the middle of the rotor 4, between the cooling oil and the rotor 4 is large. In addition, a surface of one second oil channel 510 can cool end faces of two first rotor iron cores 400, so that the middle part with a temperature of the rotor 4 can be efficiently cooled, to control temperature rise of the rotor 4.

In an implementation, each of the plurality of second oil channels 510 communicates with at least two first oil channels 410. This solution can further increase the contact area between the cooling oil and the interior of the rotor 4, and improve cooling effect.

In this implementation, the oil-cooled motor 1 includes two first rotor iron cores 400 and one second rotor iron core 500.

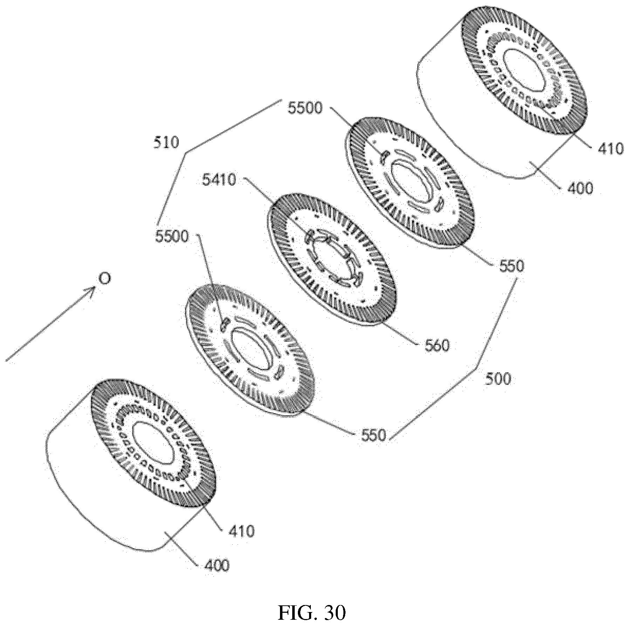

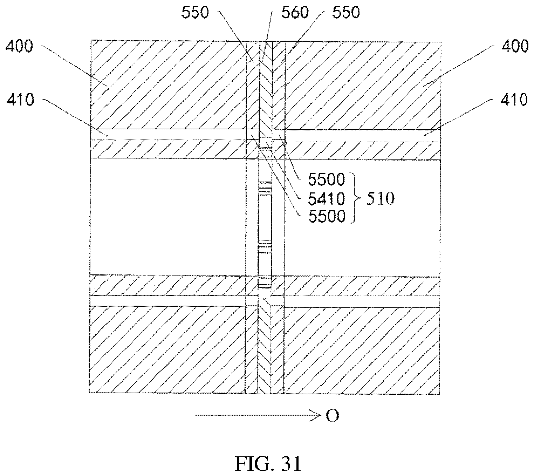

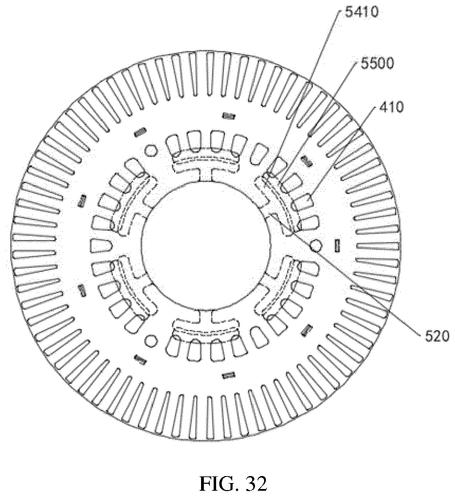

Refer to FIG. 30, FIG. 31, and FIG. 32. FIG. 30 is an exploded view of the oil-cooled motor 1 according to a twelfth embodiment of this application. FIG. 31 is a sectional view of the oil-cooled motor 1 according to a twelfth embodiment of this application. FIG. 32 is a projection diagram of the oil-cooled motor 1 in an axial direction of a rotating shaft according to a twelfth embodiment of this application.

In a possible implementation, the second rotor iron core 500 includes two end iron core sub-parts 550 and a middle iron core sub-part 560 (as shown in FIG. 30) disposed in the axial direction O of the rotating shaft 12, and the middle iron core sub-part 560 is located between the two end iron core sub-parts 550 (as shown in FIG. 30). The end iron core sub-part 550 is provided with an end sub-oil channel 5500 (as shown in FIG. 30) that penetrates through the end iron core sub-part 550 in the axial direction O of the rotating shaft 12. The middle iron core sub-part 560 is provided with a middle sub-oil channel 5410 (as shown in FIG. 30) that penetrates through the middle iron core sub-part 560 in the axial direction O of the rotating shaft 12. The middle sub-oil channel 5410 communicates with the end sub-oil channels 5500 in the two end iron core sub-parts 550 (as shown in FIG. 31), and the end sub-oil channels 5500 in the two end iron core sub-parts 550 and the middle sub-oil channel 5410 form the second oil channel 510 (as shown in FIG. 31).

In this embodiment, the end iron core sub-parts 550 are disposed on both sides of the middle iron core sub-part 560, and the cooling oil separately flows to the end sub-oil channels 5500 of the end iron core sub-parts 550 on the two sides in the axial direction O of the rotating shaft 12 through the middle sub-oil channel 5410 of the middle iron core sub-part 560, to implement internal heat dissipation for the second rotor iron core. In this solution, three iron core sub-parts are disposed in the second rotor iron core, and an oil channel is disposed in each iron core sub-part. Compared with a case in which a larger hole is provided in a same iron core sub-part, this solution can increase overall structural strength of the second rotor iron core 500.

Refer to FIG. 32. In a possible implementation, both the end sub-oil channel 5500 and the middle sub-oil channel 5410 are arc-shaped structures extending along the second oil channel 510 in the circumferential direction C of the rotating shaft 12. The middle sub-oil channel 5410 is disposed closer to the rotating shaft 12 than the end sub-oil channel 5500.

In this implementation, the middle sub-oil channel 5410 is disposed closer to the rotating shaft 12 than the end sub-oil channel 5500, so that stress can be reduced. When a circumferential size of the middle sub-oil channel 5410 is the same, and the middle sub-oil channel 5410 is disposed away from the rotating shaft 12, the middle sub-oil channel 5410 is close to a through hole for accommodating the magnetic part 600, so that stress in a part of the middle iron core sub-part 560 between two adjacent middle sub-oil channels 5410 is transferred to the through hole for accommodating the magnetic part 600. This affects structural strength at the magnetic part 600, and further reduces overall structural strength of the middle iron core sub-part 560.

When a circumferential size of the middle sub-oil channel 5410 is the same, and the middle sub-oil channel 5410 is disposed away from the rotating shaft 12, the middle sub-oil channel 5410 is close to a through hole for accommodating the magnetic part 600, so that stress in a part of the middle iron core sub-part 560 between two adjacent middle sub-oil channels 5410 is transferred to the through hole for accommodating the magnetic part 600. This affects structural strength at the magnetic part 600, and further reduces overall structural strength of the middle iron core sub-part 560. In this implementation, the middle sub-oil channel 5410 is disposed closer to the rotating shaft 12 than the end sub-oil channel 5500, so that overall structural strength of the middle iron core sub-part 560 can be improved.

Refer to FIG. 32. In a possible implementation, the opening 520 is provided on the middle iron core sub-part 560, and the opening 520 is provided on an inner circumferential surface of the middle iron core sub-part 560. The opening 520 communicates with the middle sub-oil channel 5410, and extends, from the inner circumferential surface of the middle iron core sub-part 560, away from the rotating shaft 12 in the radial direction R of the rotating shaft 12. The opening 520 communicates with the middle sub-oil channel 5410.

In this implementation, because the middle sub-oil channel 5410 communicates with the opening 520, when the middle iron core sub-part 560 is fixedly sleeved on the rotating shaft 12 through interference fitting, acting force between the rotating shaft 12 and the middle iron core sub-part 560 is concentrated on a part of the middle iron core sub-part 560 between two adjacent middle sub-oil channels 5410. In addition, when a radial length of the opening 520 is large, stress on the part of the middle iron core sub-part 560 between the two adjacent middle sub-oil channels 5410 is large.

Refer to FIG. 31 and FIG. 32 together. In a possible implementation, the end sub-oil channels 5500 in the two end iron core sub-parts 550 respectively communicate with the first oil channels 410 in the two first rotor iron cores 400. In this implementation, the cooling oil flows to the middle sub-oil channel 5410 and the end sub-oil channel 5500 of the second rotor iron core 500 through the opening 520, and then flows to the first oil channel 410 of the first rotor iron core 400 in the axial direction O of the rotating shaft 12. When structural strength of the middle iron core sub-part is not affected, heat dissipation is performed for the interior of the first rotor iron core 400 and the interior of the second rotor iron core 500, to control temperature rise of the rotor 4.

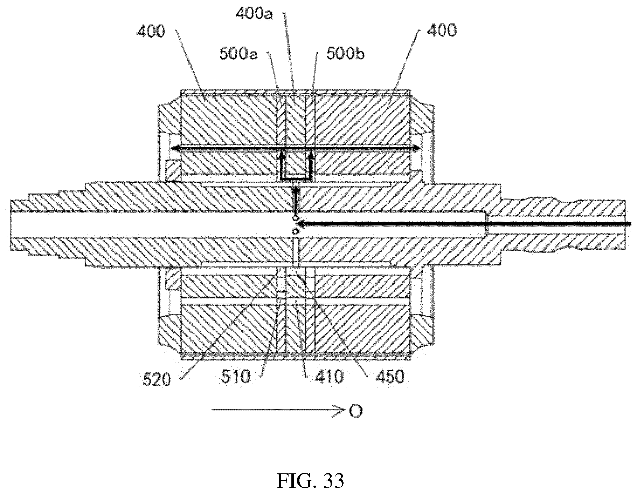

FIG. 33 is a sectional view of the oil-cooled motor 1 according to a thirteenth embodiment of this application. In a possible implementation, the oil-cooled motor 1 includes at least three first rotor iron cores 400 and at least two second rotor iron cores 500. A quantity of first rotor iron cores 400 is greater than a quantity of second rotor iron cores 500. In the axial direction O of the rotating shaft 12, the at least three first rotor iron cores 400 and the at least two second rotor iron cores 500 are alternately arranged. A thickness, in the axial direction O of the rotating shaft 12, of a first rotor iron core 400 that is close to the middle and that is of the at least three first rotor iron cores 400 is less than a thickness, in the axial direction O of the rotating shaft 12, of a first rotor iron core 400 that is away from the middle.

In the embodiment shown in FIG. 33, when the oil-cooled motor 1 includes three first rotor iron cores 400 and two second rotor iron cores 500, because the first rotor iron cores 400 and the second rotor iron cores 500 are alternately arranged in the axial direction, the first rotor iron core 400 is located in the middle of the rotor 4. The first rotor iron core 400 in the middle is marked as 400a, and the second rotor iron cores 500 on two sides of 400a are marked as 500a and 500b respectively. A thickness of 400a in the axial direction O of the rotating shaft 12 is less than a thickness of another first rotor iron core 400 in the rotor 4 in the axial direction O of the rotating shaft 12. The opening 520 of the second rotor iron core 500 penetrates through two end faces of the second rotor iron core 500, and separately communicates with the first oil slots 450 on both sides.

In this implementation, when flowing through the second rotor iron core 500, the cooling oil is in contact with a side wall of the second oil channel 510 in a direction from an inner circumferential surface of the second rotor iron core 500 to an outer circumferential surface of the second rotor iron core 500. In addition, the cooling oil is further in contact with end faces of the first rotor iron cores 400 that are located on two sides in the axial direction of the second oil channel 510. When flowing through the first rotor iron cores 400, the cooling oil is in contact with an inner wall of the first oil channel 410 in axial directions of the first rotor iron cores 400. Because the second oil channel 510 at least communicates with the two first oil channels 410, a cross section of the second oil channel 510 needs to be set to be greater than a cross section of the first oil channel 410. The thickness of 400a in the axial direction O of the rotating shaft 12 is set to be small, which is equivalent to the following: There is a small interval between 500a and 500b. When the rotor 4 is cooled, the cooling oil flows through the first oil slot 450 of 400a and the opening 520 of 500a in sequence, then flows into the second oil channel 510 of 500a, and then flows into the first oil channel 410 of 400a and the second oil channel 510 of 500b. When flowing into the second oil channel 510 of 500a and the second oil channel 510 of 500b, the cooling oil is changed slightly in temperature compared with the cooling oil that does not flow into the rotor 4, and still has good cooling effect. Because a heating part of the rotor 4 is mainly concentrated in the middle, the cooling oil has a large contact area with the second oil channels 510 in 500a and 500b, and a surface of one second oil channel 510 in 500a and 500b can cool the end faces of the two first rotor iron cores 400, so that the middle part with a high temperature of the rotor 4 can be efficiently heat-dissipated, to control temperature rise of the rotor 4.

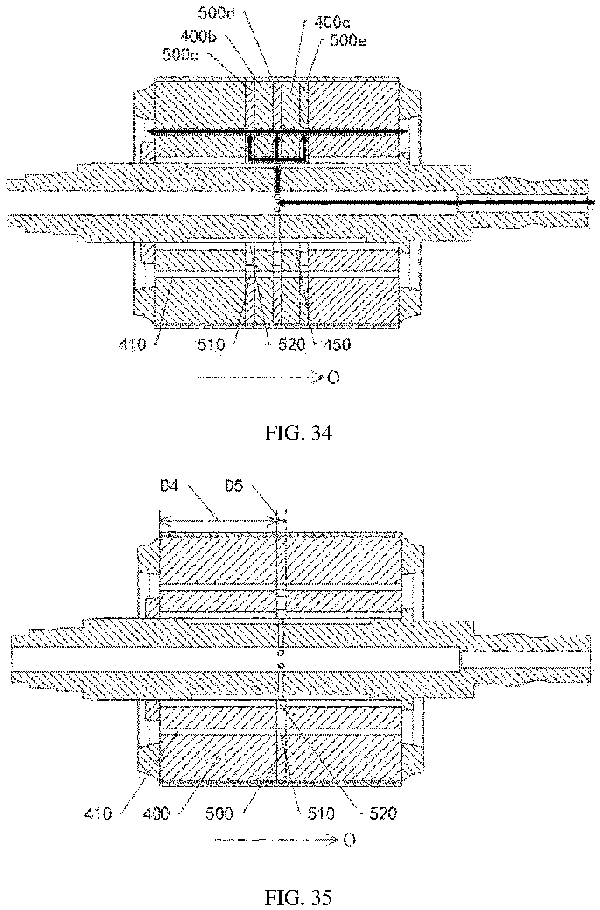

Return to the first embodiment. FIG. 34 is a sectional view of the oil-cooled motor 1 according to the first embodiment of this application. In an implementation, when the oil-cooled motor 1 includes four first rotor iron cores 400 and three second rotor iron cores 500, the three second rotor iron cores 500 are sequentially marked as 500c, 500d, and 500e in an axial direction of the second rotor iron cores 500, where 500d is located in the middle of the rotor 4. The first rotor iron cores 400 located on two sides of 500d are respectively marked as 400b and 400c. Axial dimensions of 400b and 400c are less than those of the other first rotor iron cores 400 in the rotor 4, and the opening 520 of the second rotor iron core 500 penetrates through two end faces of the second rotor iron core 500, and separately communicates with the first oil slots 450 on the two sides.

In this implementation, when flowing through the second rotor iron core 500, the cooling oil is in contact with a side wall of the second oil channel 510 in a direction from an inner circumferential surface of the second rotor iron core 500 to an outer circumferential surface of the second rotor iron core 500. When flowing through the first rotor iron core 400, the cooling oil is in contact with an inner wall of the first oil channel 410 in the axial direction of the first rotor iron core 400. Because the second oil channel 510 at least communicates with the two first oil channels 410, a radial cross section of the second oil channel 510 is greater than a radial cross section of the first oil channel 410. Axial dimensions of 400b and 400c are set to be smaller, which is equivalent to the following: There is a small interval between 500d and each of 500c and 500e on both sides. When the rotor 4 is cooled, the cooling oil flows into the second oil channels 510 of 500c and 500e after only passing through the first oil channels 410 of 400b and 400c by a small distance. When flowing into the second oil channel 510, the cooling oil is changed slightly in temperature relative to that of the cooling oil before the cooling oil flows into the rotor 4, and still has good cooling effect. Because a heating part of the rotor 4 is mainly concentrated in the middle, the cooling oil has a large contact area with the second oil channels 510 in 500c, 500d and 500e, and a surface of one second oil channel 510 in 500c, 500d and 500e can cool the end faces of the two first rotor iron cores 400, so that the middle part with a high temperature of the rotor 4 can be efficiently heat-dissipated, to control temperature rise of the rotor 4.

It should be noted that, for example, embodiments corresponding to FIG. 33 to FIG. 34 merely indicate a quantity of first rotor iron cores 400 and a quantity of second rotor iron cores 500. There may be four or more first rotor iron cores 400, and there may be three or more second rotor iron cores 500. A person skilled in the art may select according to an actual requirement. This is not limited in this application.

Return to the eleventh embodiment. FIG. 35 is a sectional view of the oil-cooled motor 1 according to the eleventh embodiment of this application. In a possible implementation, a thickness of the second rotor iron core 500 in the axial direction O of the rotating shaft 12 is less than a thickness of the first rotor iron core 400 in the axial direction O of the rotating shaft 12. In this implementation, the thickness of the first rotor iron core 400 in the axial direction O of the rotating shaft 12 is D4, and the thickness of the second rotor iron core 500 in the axial direction O of the rotating shaft 12 is D5. D5 is set to be greater than D4. In one aspect, because a cross-sectional area occupied by disposing the second oil channel 510 and providing the opening 520 on the second rotor iron core 500 is greater than a cross-sectional area occupied by disposing the first oil channel 410 and providing the first oil slot 450 on the first rotor iron core 400. D5 is set to be greater than D4, so that a vacant part in the rotor 4 due to oil channel disposing is small. This helps ensure integral magnetic conductivity effect and structural strength of the rotor 4. In another aspect, because heat of the rotor 4 is mainly concentrated in the middle, if the thickness of the second rotor iron core 500 in the middle is set to be larger in the axial direction O of the rotating shaft 12, the cooling oil has a higher temperature after flowing through the second rotor iron core 500. In this case, cooling effect of the first rotor iron core 400 on both sides is greatly affected. In this solution, setting D5 to be greater than D4 helps improve heat dissipation effect of the first rotor iron core 400. In an implementation, the thickness D5 of the second rotor iron core 500 in the axial direction O of the rotating shaft 12 is 3 mm.

It should be noted that, in some implementations of the first embodiment to the thirteenth embodiment, optionally, the thickness of the second rotor iron core 500 in the axial direction O of the rotating shaft 12 may be set to be less than the thickness of the first rotor iron core 400 in the axial direction O of the rotating shaft 12.

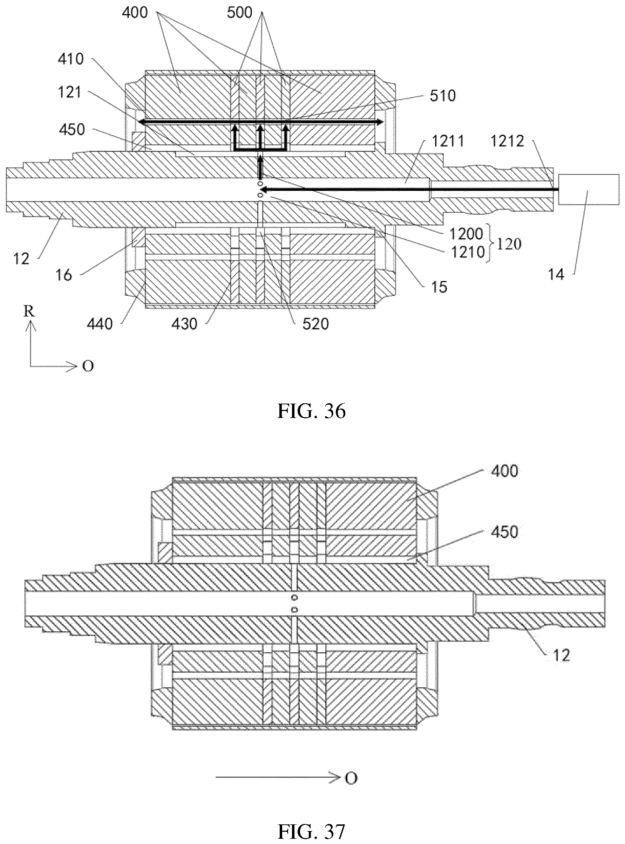

Return to the first embodiment. FIG. 36 is a sectional view of the oil-cooled motor 1 according to the first embodiment of this application. In a possible implementation, the rotating shaft oil channel 120 includes an axial oil channel 1210 extending in the axial direction O of the rotating shaft 12 and a radial oil channel 1200 extending in the radial direction R of the rotating shaft 12. The radial oil channel 1200 penetrates through an inner surface and an outer surface of the rotating shaft 12 in the radial direction R of the rotating shaft 12. The radial oil channel 1200 communicates with both the axial oil channel 1210 and the opening 520.

In this implementation, an end of the axial oil channel 1210 communicates with an oil cooling system. When the rotor 4 is cooled, cooling oil in the cooling system 14 enters the axial oil channel 1210. Because the radial oil channel 1200 communicates with the axial oil channel 1210 and the opening 520, the cooling oil enters the opening 520 from the axial oil channel 1210 through the radial oil channel 1200, and then flows through the second oil channel 510 and the first oil channel 410 in sequence, to dissipate heat for the interior of the rotor 4.

In an implementation, the axial oil channel 1210 includes an axial oil channel body 1211 and an axial oil channel inlet 1212. The axial oil channel inlet 1212 is located at an end that is of the axial oil channel body 1211 and that is close to the cooling system 14. The axial oil channel inlet 1212 communicates with the cooling system 14, and when the rotor 4 is cooled, the cooling oil in the cooling system 14 enters the axial oil channel body 1211 from the axial oil channel inlet 1212.

It should be noted that the rotating shaft oil channel 120 in the first embodiment to the thirteenth embodiment is applicable to the implementation shown in FIG. 36.

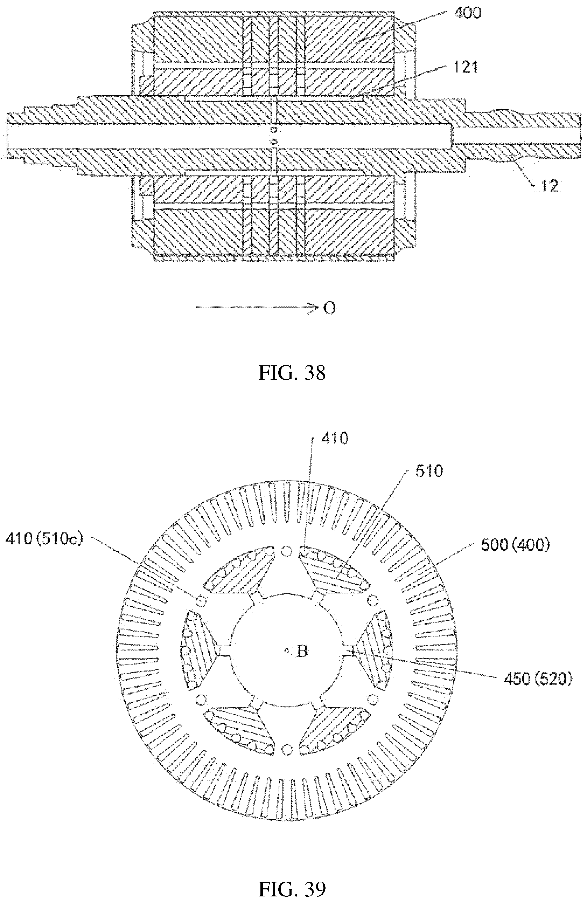

Refer to FIG. 36 to FIG. 38. FIG. 37 is a sectional view of the oil-cooled motor 1 according to a fourteenth embodiment of this application. FIG. 38 is a sectional view of the oil-cooled motor 1 according to a fifteenth embodiment of this application. In a possible implementation, a second oil slot 121 (as shown in FIG. 36) extending in the axial direction O of the rotating shaft 12 is provided on an outer circumferential surface of the rotating shaft 12, and a second oil slot 121 communicates with both the radial oil channel 1200 and the opening 520 (as shown in FIG. 36).

In this implementation, the first oil slot 450 and the second oil slot 121 are used in cooperation with each other (as shown in FIG. 36), and the cooling oil flows from the radial oil channel 1200 into an oil channel formed through cooperation of the first oil slot 450 and the second oil slot 121, and then flows into the opening 520. In some other embodiments, the first oil slot 450 and the second oil slot 121 may be used separately. For example, the first rotor iron core 400 includes the first oil slot 450, and the second oil slot 121 is not provided on the rotating shaft 12

(as shown in FIG. 37), or the first rotor iron core 400 is not provided with the first oil slot 450, and the second oil slot 121 is provided on the rotating shaft 12 (as shown in FIG. 38).

It should be noted that disposing of the first oil slot 450 and the second oil slot 121 in the first embodiment, the fourteenth embodiment, and the fifteenth embodiment is also applicable to that in the second embodiment to the thirteenth embodiment.

Refer to FIG. 36. In a possible implementation, an outer circumferential surface of the rotating shaft 12 and an inner circumferential surface of the rotor 4 are in interference fit. This solution helps eliminate impact of a fitting gap between the rotor 4 and the rotating shaft 12 on connection stability, and improve overall structural strength of the rotor 4 and the rotating shaft 12.

In an implementation, the oil-cooled motor 1 further includes a shaft shoulder 15 and a retainer ring 16. The shaft shoulder 15 is disposed outside a rotating shaft 12 portion corresponding to an end that is of the rotor 4 and that is away from the axial oil channel inlet 1212. The retainer ring 16 is disposed outside a rotating shaft 12 portion corresponding to an end that is of the rotor 4 and that is close to the axial oil channel inlet 1212. The shaft shoulder 15 and the retainer ring 16 jointly enable the rotor 4 to be axially fastened to the rotating shaft 12. In addition, the shaft shoulder 15 is disposed to prevent the cooling oil from leaking along the first oil slot 450, so that waste of the cooling oil is avoided.

FIG. 39 is a schematic diagram of a structure of the second rotor iron core 500 in the oil-cooled motor 1 according to a sixteenth embodiment of this application. In a possible implementation, there are one or more stray oil channels 510c between two adjacent second oil channels 510, each stray oil channel 510c corresponds to one first oil channel 410, and each stray oil channel 510c communicates with the corresponding first oil channel 410.

In this implementation, at least a part of each first oil channel 410 inlet is located in a projection region of the stray oil channel 510c. When flowing through the second rotor iron core 500, the cooling oil flows to the first oil channel 410 through both the second oil channel 510 and the stray oil channel 510c. In this solution, disposing the stray oil channel 510c can increase the contact area between the cooling oil and the interior of the second rotor iron core 500. In addition, because each stray oil channel 510c is disposed corresponding to one first oil channel 410, utilization of the first oil channel 410 on the first rotor iron core 400 is further improved. This helps improve cooling efficiency of the cooling oil for the rotor.

It should be noted that, in some implementations of the second rotor iron core 500 in the first embodiment to the fifteenth embodiment, optionally, an implementation shown in FIG. 39 may be used.

Refer to FIG. 39. In a possible implementation, the N second oil channels 510 and the one or more stray oil channels 510c located between the two adjacent second oil channels 510 jointly form a rotational symmetry structure or an axisymmetric structure.

In this implementation, the second oil channel 510 and the stray oil channel 510c are distributed in a rotationally symmetrical manner with respect to the axis B of the second rotor iron core. In this solution, the second oil channel 510 and the stray oil channel 510c are distributed in a rotationally symmetrical manner, so that processing process difficulty of the second rotor iron core 500 can be reduced. In addition, because the second oil channel 510 and the stray oil channel 510c are uniformly distributed on a peripheral side of the axis B, the cooling oil can flow out from different parts of the rotor. This helps the cooling oil to uniformly absorb heat inside the rotor, and provides an important guarantee for heat dissipation effect of the oil-cooled motor.

The oil-cooled motor, the powertrain, and the vehicle provided in embodiments of this application are described in detail above. The principle and embodiments of this application are described in this specification by using specific examples. The foregoing descriptions of embodiments are merely intended to help understand the method of this application and the core idea thereof. In addition, a person of ordinary skill in the art may change specific embodiments and the application scope based on the idea of this application. In conclusion, the content of this specification should not be understood as a limitation on this application.

## Claims

1. An oil-cooled motor, comprising a rotating shaft, a first rotor iron core, and a second rotor iron core, wherein both the first rotor iron core and the second rotor iron core are sleeved on the rotating shaft, and the first rotor iron core and the second rotor iron core are adjacent to each other;
a rotating shaft oil channel is disposed in the rotating shaft;
M first oil channels are disposed in the first rotor iron core, and each first oil channel penetrates through two end faces of the first rotor iron core; and
N second oil channels are disposed in the second rotor iron core, N openings are provided on an inner circumferential surface that is of the second rotor iron core and that faces the rotating shaft, the N openings are in one-to-one communication with the N second oil channels, all the N openings communicate with the rotating shaft oil channel, each second oil channel communicates with a plurality of first oil channels, M and N are both positive integers, and M is greater than N.

2. The oil-cooled motor according to claim 1, wherein the N second oil channels jointly form an axisymmetric structure, and an axis of the second rotor iron core is located on an axis of symmetry of the axisymmetric structure.

3. The oil-cooled motor according to claim 1, wherein the N second oil channels jointly form a rotational symmetry structure, and a rotation center of the rotational symmetry structure is an axis of the second rotor iron core.

4. The oil-cooled motor according to claim 3, wherein the N second oil channels jointly form a 360°/N rotational symmetry structure.

5. The oil-cooled motor according to any one of claims 1 to 4, wherein one or more stray oil channels exist between every two adjacent second oil channels, each of the stray oil channels corresponds to one first oil channel, and each of the stray oil channels is configured to communicate with the corresponding first oil channel.

6. The oil-cooled motor according to claim 5, wherein the N second oil channels and the one or more stray oil channels located between the two adjacent second oil channels jointly form a rotational symmetry structure.

7. The oil-cooled motor according to any one of claims 1 to 6, wherein the first rotor iron core is provided with a first rotor end face facing the second rotor iron core, and the second rotor iron core is provided with a second rotor end face facing the first rotor iron core; and
an outlet of the second oil channel is located on the second rotor end face, an inlet of the first oil channel is located on the first rotor end face, at least a part of an inlet of each of more than two first oil channels is located in a projection region of the second oil channel, and the projection region of the second oil channel is a region that is enclosed by a projection, on the first rotor end face, of an edge of the outlet of the second oil channel in an axial direction of the rotating shaft.

8. The oil-cooled motor according to any one of claims 1 to 7, wherein the second oil channel comprises a first end and a second end that are disposed opposite to each other in a radial direction of the rotating shaft, the first end is connected to an end that is of the opening and that is away from the rotating shaft, and the first end is closer to the rotating shaft than the second end; and
at least a part of the N second oil channels are featured oil channels, and in the featured oil channel, a width of the second end in a rotation direction of the second rotor iron core is greater than a width of the first end in the rotation direction of the second rotor iron core.

9. The oil-cooled motor according to claim 8, wherein in a radial direction of the second rotor iron core, a width of the featured oil channel gradually increases from the first end to the second end in the rotation direction of the second rotor iron core.

10. The oil-cooled motor according to claim 8 or 9, wherein a cross section of the featured oil channel is arc-shaped or sector-shaped, and the cross section of the featured oil channel is perpendicular to the axial direction of the rotating shaft.

11. The oil-cooled motor according to any one of claims 1 to 10, wherein N first oil slots extending in the axial direction of the rotating shaft are provided on an inner circumferential surface of the first rotor iron core, and the first oil slot is spaced from the first oil channel; and
the opening penetrates through the second rotor iron core in the axial direction of the rotating shaft, and the N openings are in one-to-one communication with the N first oil slots in the axial direction of the rotating shaft.

12. The oil-cooled motor according to any one of claims 1 to 11, wherein the oil-cooled motor further comprises a plurality of magnetic parts, the magnetic part is configured to generate magnetic force, each of the plurality of magnetic parts penetrates through the first rotor iron core and the second rotor iron core in the axial direction of the rotating shaft, the plurality of magnetic parts are sequentially spaced from each other around an axis of the rotating shaft, and the first oil channel is located between the magnetic part and the inner circumferential surface of the first rotor iron core.

13. The oil-cooled motor according to any one of claims 1 to 12, wherein the second rotor iron core comprises an end iron core sub-part and a middle iron core sub-part that are disposed adjacent to each other in the axial direction of the rotating shaft, the middle iron core sub-part is further away from the first rotor iron core than the end iron core sub-part, the end iron core sub-part is provided with an end sub-oil channel that penetrates through the end iron core sub-part in the axial direction of the rotating shaft, the middle iron core sub-part is provided with a groove, a groove opening of the groove faces the end iron core sub-part, and the end sub-oil channel and the groove communicate with each other and form the second oil channel.

14. The oil-cooled motor according to claim 13, wherein the opening is provided on the middle iron core sub-part, and extends, from an inner circumferential surface of the middle iron core sub-part, away from the rotating shaft in the radial direction of the rotating shaft; and the groove communicates with the opening.

15. The oil-cooled motor according to any one of claims 1 to 12, wherein the oil-cooled motor comprises two first rotor iron cores and one second rotor iron core that are all sleeved on the rotating shaft, and the second rotor iron core is located between the two first rotor iron cores; and
the second oil channel penetrates through the second rotor iron core, and the second oil channel separately communicates with a plurality of first oil channels in each first rotor iron core.

16. The oil-cooled motor according to claim 15, wherein the second rotor iron core comprises two end iron core sub-parts and a middle iron core sub-part that are disposed in the axial direction of the rotating shaft, and the middle iron core sub-part is located between the two end iron core sub-parts;
the end iron core sub-part is provided with an end sub-oil channel that penetrates through the end iron core sub-part in the axial direction of the rotating shaft;
the middle iron core sub-part is provided with a middle sub-oil channel that penetrates through the middle iron core sub-part in the axial direction of the rotating shaft; and
the middle sub-oil channel communicates with the end sub-oil channels in the two end iron core sub-parts, and the end sub-oil channels in the two end iron core sub-parts and the middle sub-oil channel form the second oil channel.

17. The oil-cooled motor according to claim 16, wherein the opening is provided on the middle iron core sub-part, and extends, from an inner circumferential surface of the middle iron core sub-part, away from the rotating shaft in the radial direction of the rotating shaft; and the opening communicates with the middle sub-oil channel.

18. The oil-cooled motor according to claim 16, wherein the end sub-oil channels in the two end iron core sub-parts respectively communicate with the first oil channels in the two first rotor iron cores.

19. The oil-cooled motor according to claim 16, wherein the middle sub-oil channel is disposed closer to the rotating shaft than the end sub-oil channel.

20. The oil-cooled motor according to any one of claims 1 to 12 and 15 to 18, wherein the oil-cooled motor further comprises at least three first rotor iron cores and at least two second rotor iron cores, a quantity of first rotor iron cores is greater than a quantity of second rotor iron cores, the at least three first rotor iron cores and the at least two second rotor iron cores are alternately arranged in the axial direction of the rotating shaft, and a thickness, in the axial direction of the rotating shaft, of a first rotor iron core that is close to the middle and that is of the at least three first rotor iron cores is less than a thickness, in the axial direction of the rotating shaft, of a first rotor iron core that is away from the middle.

21. The oil-cooled motor according to any one of claims 1 to 20, wherein a thickness of the second rotor iron core in the axial direction of the rotating shaft is less than a thickness of the first rotor iron core in the axial direction of the rotating shaft.

22. The oil-cooled motor according to any one of claims 1 to 21, wherein the rotating shaft oil channel comprises an axial oil channel extending in the axial direction of the rotating shaft and a radial oil channel extending in the radial direction of the rotating shaft, the radial oil channel penetrates through an inner surface and an outer surface of the rotating shaft in the radial direction of the rotating shaft, and the radial oil channel communicates with both the axial oil channel and the opening.

23. The oil-cooled motor according to claim 22, wherein a second oil slot extending in the axial direction of the rotating shaft is provided on an outer circumferential surface of the rotating shaft, and the second oil slot communicates with both the radial oil channel and the opening.

24. A powertrain, comprising a transmission and the oil-cooled motor according to any one of claims 1 to 23, wherein a rotating shaft of the oil-cooled motor is fastened to a power input shaft of the transmission, and is configured to output power to the power input shaft.

25. A vehicle, comprising a vehicle body and the oil-cooled motor according to any one of claims 1 to 23, wherein the oil-cooled motor is mounted on the vehicle body; or
the vehicle comprises a vehicle body and the powertrain according to claim 24, wherein the powertrain is mounted on the vehicle body.
